(19) Europäisches Patentamt
European Patent Office
Office européen des brevets

(11) **EP 4 020 378 B1**

(12) **FASCICULE DE BREVET EUROPEEN**

(45) Date de publication et mention de la délivrance du brevet:
**11.10.2023   Bulletin 2023/41**

(21) Numéro de dépôt: **21209029.4**

(22) Date de dépôt: **18.11.2021**

(51) Classification Internationale des Brevets (IPC):
**G06T 5/00** *(2006.01)*          **G06T 7/70** *(2017.01)*

(52) Classification Coopérative des Brevets (CPC):
**G06T 5/002; G06T 7/70;** G06T 2207/10056

(54) **FILTRE DE TRAITEMENT D'IMAGE POUR LA LOCALISATION DE GOUTTES DANS UNE IMAGE MULTIDIMENSIONNELLE ET PROCÉDÉ DE TRAITEMENT D'IMAGE ASSOCIÉ**

BILDVERARBEITUNGSFILTER ZUR LOKALISIERUNG VON TROPFEN IN EINEM MEHRDIMENSIONALEN BILD UND ENTSPRECHENDES BILDVERARBEITUNGSVERFAHREN

IMAGE PROCESSING FILTER FOR LOCATING DROPS IN A MULTIDIMENSIONAL IMAGE AND ASSOCIATED IMAGE PROCESSING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **22.12.2020   FR 2013932**

(43) Date de publication de la demande:
**29.06.2022   Bulletin 2022/26**

(73) Titulaire: **Commissariat à l'énergie atomique et aux énergies alternatives
75015 Paris (FR)**

(72) Inventeur: **GUEDJ, Cyril
38054 GRENOBLE CEDEX 09 (FR)**

(74) Mandataire: **Brevalex
Tour Trinity
1 B Place de la Défense
92400 Courbevoie (FR)**

(56) Documents cités:
**EP-A1- 0 893 783**

- **CANNISTRACI CARLO V. ET AL: "Median-modified Wiener filter provides efficient denoising, preserving spot edge and morphology in 2-DE image processing", PROTEOMICS, vol. 9, no. 21, 1 novembre 2009 (2009-11-01), pages 4908-4919, XP055831890, DE ISSN: 1615-9853, DOI: 10.1002/pmic.200800538**
- **CHINRUNGRUENG C ET AL: "Fast edge-preserving noise reduction for ultrasound images", NUCLEAR SCIENCE SYMPOSIUM CONFERENCE RECORD, 2000 IEEE LYON, FRANCE 15-20 OCT. 2000, PISCATAWAY, NJ, USA,IEEE, US, vol. 3, 25 octobre 2000 (2000-10-25), pages 18_99-18_103, XP010556665, DOI: 10.1109/NSSMIC.2000.949243 ISBN: 978-0-7803-6503-2**

## Description

### DOMAINE TECHNIQUE

L'invention se situe dans le domaine du traitement d'image et, plus précisément, dans le domaine du filtrage numérique d'une image à n-dimensions pour localiser les gouttes, taches ou spots qu'elle contient. Elle concerne un filtre de traitement d'image par convolution de données pour la localisation de gouttes dans un n-hyperpavé de dimension n > 1 et un procédé de traitement d'image utilisant ce filtre. Par définition, une goutte est une région d'un hyperespace dans laquelle une propriété la distingue du bruit ambiant. Une tache est une goutte à 2 dimensions. Un point est une goutte comportant un seul élément.

L'invention s'applique notamment à la détection de taches dans des images obtenues par microscopie électronique en transmission à haute résolution, par microscopie de fluorescence, microscopie à force atomique, microscopie à effet tunnel, ou tomographie électronique par exemple. Plus généralement, elle s'applique à la détection et à la transformation de gouttes dans des images multidimensionnelles.

Cette invention est également adaptée aux outils d'intelligence artificielle, notamment les réseaux neuronaux de convolution qui nécessitent l'utilisation de filtres de convolution ou les réseaux de neurones à impulsions dont les données utiles sont en définitive des gouttes.

### ÉTAT DE LA TECHNIQUE ANTÉRIEURE

Les images de microscopie dans lesquelles les taches sont recherchées présentent généralement un niveau de bruit pouvant noyer l'information. Le bruit peut avoir diverses sources, en particulier le bruit de lecture de l'imageur, le bruit thermique, le bruit de photon ou encore le bruit dû aux vibrations mécaniques du capteur ou de l'échantillon. Le niveau de bruit peut être réduit à l'aide d'un large éventail de méthodes (voir par exemple l'article de A. Buades, B. Coll, and J. M. Morel, "A review of image denoising methods, with a new one," SIAM J. Multiscale Model. Simul., vol. 4, no. 2, pp. 490-530, 2005). Ces méthodes peuvent toutefois générer des artéfacts et se révéler défaillantes lorsque le taux de comptage des photons est faible. Or, pour minimiser les dégradations provoquées par la mesure, il est impératif de procéder à des mesures les plus rapides possibles afin de minimiser les dégâts d'irradiation électroniques.

De nombreuses méthodes ont déjà été développées pour la détection de taches dans une image, notamment pour l'étude des mécanismes biologiques par microscopie par fluorescence. Des revues ont été publiées sur ce sujet, par exemple I. Smal et al., « Quantitative comparison of spot détection methods in fluorescence microscopy », IEEE Transactions on Medical Imaging 29 (2) : 282-301 (2010). Sont notamment connues les méthodes de soustraction de fond continu, les méthodes morphologiques basées sur la décomposition en ondelettes ou basées sur l'intelligence artificielle. L'article M. Mabaso et al., « Spot détection methods in fluorescence microscopy imaging: a review », Image Anal. Stereol., 37 : 173-190 (2018), présente quelques-unes de ces méthodes. D'autres méthodes ont récemment été proposées, notamment dans l'article G. Wang et al., « Automated blob détection using itérative laplacian of Gaussian filtering and unilateral second-order gaussian kernels », Digital Signal Processing 96, 102592 (2020). Ces méthodes sont basées sur l'utilisation du laplacien de filtres gaussiens ou sur la différence d'images convoluées par un filtre gaussien.

Une détection de gouttes par utilisation d'un algorithme de Savitzky-Golay est divulguée par la publication "Median-modified Wiener filter provides efficient denoising, preserving spot edge and morphology in 2-DE image processing", Cannistraci Carlo et al., Proteomics, vol. 9, no. 21, p. 4908-4919. D'autres aspects concernant l'implémentation du filtre de Savitzky-Golay sont divulgués par la publication "Fast edge-preserving noise réduction for ultrasound images", Chinrungrueng C et al, Nuclear science symposium conférence record, 15-20 octobre 2000, vol. 3, p. 99-103, ainsi que par le brevet EP0893783 A1.

Globalement, l'éventail très large des différentes méthodes de soustraction du bruit et de détection de taches peut être classifié en 5 groupes : méthodes dans le réseau réel (spatial domain), méthodes dans un domaine transformé (transform domain methods), méthodes dans les domaines statistiques (statistical domain methods), méthodes hybrides et méthodes de type intelligence artificielle. Les méthodes de soustraction du bruit et de détection de spots dans une image sont complexes à mettre en oeuvre et nécessitent d'importantes ressources de calcul. En outre, elles ne sont pas toujours adaptées au traitement d'images de dimension supérieure à deux. Un but de l'invention est donc de proposer une technique à la fois rapide et précise nécessitant relativement peu de ressources de calcul pour localiser des gouttes dans une image multidimensionnelle (n-hyperpavé) avec n > 1.

### EXPOSÉ DE L'INVENTION

À cet effet, l'invention repose sur la construction d'un filtre numérique générique (noyau de convolution) se présentant sous forme d'un hyperpavé et comprenant un ensemble de points formant une boule incluse dans l'hyperpavé et dont les valeurs sont déterminées en fonction d'un algorithme de type Savitzky-Golay, c'est-à-dire basées sur la publication originale de Savitzky et Golay et les variantes publiées de cette méthode qui consistent à approximer un ensemble de points par une fonction localement polynomiale. Selon l'ordre de dérivation utilisé, le filtre peut être un filtre de lissage et de débruitage (dérivée d'ordre 0) ou un filtre de différentiation (dérivée d'ordre 1 pour la dérivée première et d'ordre n pour la dérivée n-ième). Il existe beaucoup d'autres algorithmes, mais l'avantage de l'algorithme de Savitzky-Golay est le respect de la position des maxima, d'où son utilisation classique pour le lissage des spectres $y = f(x)$ expérimentaux.

La famille de noyaux de convolution proposés dans ce brevet fonctionne avec des taux de comptage réduits et permet de soustraire une quantité importante de bruit tout en respectant précisément la position des gouttes de l'image.

Plus précisément, l'invention a pour objet un filtre de traitement d'image par convolution pour la localisation de gouttes dans une image, le filtre et l'image étant chacun formés d'un ensemble de points définissant un n-hyperpavé dans un espace à n dimensions, n étant un entier supérieur ou égal à deux, chaque point du filtre et de l'image étant associé à une valeur numérique. Le filtre comporte un premier sous-ensemble de points formant une n-boule et un deuxième sous-ensemble de points comprenant les points n'appartenant pas au premier sous-ensemble. La valeur des points du premier sous-ensemble est déterminée, depuis le centre vers la périphérie de la n-boule, en fonction de coefficients calculés par une méthode d'approximation polynomiale de type Savitzky-Golay. La valeur des points du deuxième sous-ensemble est nulle.

Au sens de l'invention, une goutte dans une image est un ensemble de points contigus qui se détachent du bruit de fond ambiant. Pour un n-hyperespace, on parle de goutte. Visuellement, cela correspond par exemple à une goutte d'eau sur une vitre, ou une étoile qui se détache du fond cosmique diffus. Dans la vision par ordinateur en 2D, une tache, un spot ou un blob est la région d'une image qui diffère des régions environnantes par une propriété telle que la luminosité ou la couleur. De façon informelle, une goutte est une région d'un hyperespace qui se détache du bruit ambiant.

La méthode de Savitzky-Golay est décrite dans les publications originales suivantes : Savitzky, A., and Golay, M. J. E., (1964) « Smoothing and différentiation of data by simplified least-squares procedures », Analytical Chemistry, 36, pp. 1627-1639 et P. A. Gorry, « General least-squares smoothing and différentiation by the convolution (Savitzky-Golay) method », Anal. Chem. 62 (6) (1990) 570-573. Des généralisations de cette méthode ont été proposées par la suite, par exemple dans Thornley, David J., « Anisotropic Multidimensional Savitzky Golay kernels for Smoothing, Differentiation and Reconstruction (PDF) (Technical report) », Imperial College Department of Computing, 2066/8 (2006). Ces méthodes permettent de générer des coefficients d'un noyau de convolution permettant d'approximer localement une courbe, une surface ou un volume par son plus proche équivalent polynomial. Dans la suite, on appelle « méthode de type Savitzky-Golay » l'ensemble de ces méthodes, qui reposent toutes sur la même idée d'une approximation locale de la position des points par une expression analytique polynômiale.

Au sens de l'invention, une n-boule centrée en un point $P$ est définie comme un ensemble de points dont la distance par rapport au point $P$ est inférieure ou égale à un rayon $r$, où $r$ est un nombre réel. La distance est de préférence définie comme la distance euclidienne. Cette définition est classiquement utilisée en topologie analytique dans l'espace métrique euclidien usuel.

Les points de l'image et du filtre sont chacun organisés sous forme d'une matrice à n dimensions, de sorte à former un hyperpavé. Pour une image bidimensionnelle, les points sont également appelés « pixels ». Le filtre comporte alors un ensemble de pixels organisés en $A$ lignes et $B$ colonnes et l'image comporte un ensemble de pixels organisés en $P$ lignes et en $Q$ colonnes, avec $A, B, P$ et $Q$ des entiers naturels supérieurs ou égaux à 3, $A < P$ et $B < Q$. Le filtre présente de préférence une forme carrée, de sorte que $A = B$. Pour une image tridimensionnelle, les points sont également appelés « voxels ». Le filtre comporte alors un ensemble de voxels organisés sous forme d'une grille tridimensionnelle de dimensions $A \times B \times C$ et l'image comporte un ensemble de voxels organisés sous forme d'une grille tridimensionnelle de dimensions $P \times Q \times R$, avec $A, B, C, P, Q$ et $R$ des entiers naturels supérieurs ou égaux à 3, $A < P, B < Q$ et $C < R$. Le filtre est de préférence un hypercube, de sorte que $A = B = C$.

Selon une forme particulière de réalisation, la n-boule est centrosymétrique, les points situés à une même distance d'un centre de ladite n-boule étant associés à une même valeur. La boule est alors formée de deux demi-boules symétriques.

Pour la suite de la description, on pose par définition : $s = (d - 1)/2$, où $d$ représente le diamètre impair de la n-boule, $r = \sqrt{i_1{}^2 + i_2{}^2 + \cdots + i_n{}^2}$, où $i_1, i_2 \ldots i_n$ définissent les $n$ indices d'éloignement par rapport au centre de la n-boule pour chaque dimension de l'espace du filtre, ces indices d'éloignement étant des nombres entiers variant entre $-s$ et $s$, et $signe(x)$ est la fonction signe et vaut +1 pour $x \geq 0$ et -1 pour $x < 0$.

De manière générale, le filtre s'écrit $[F(i_1,i_2,\ldots,i_n)]$, $F(i_1,i_2,\ldots,i_n)$ étant les valeurs de ses points.

3

Filtre de lissage

Selon une première branche de l'invention, le filtre est un filtre de lissage, correspondant, par exemple, à une dérivée d'ordre 0.

Selon une forme particulière de réalisation, les coefficients de la méthode de type Savitzky-Golay sont obtenus pour des degrés de lissage de 2 ou 3 (lissage quadratique cubique), des degrés de lissage de 4 ou 5 (lissage quartique quintique), ou des degrés de lissage supérieurs conformément aux explications de Savitzky et Golay.

Dans un premier mode de réalisation, correspondant à un lissage polynomial de degré 2 ou 3, la valeur $F(i_1, i_2, ..., i_n)$ des points du filtre vaut zéro si $r > s$ et, si $r \leq s$, est proportionnelle à :

$$A_s(r) = 3s^2 + 3s - 1 - 5r^2$$

Dans un deuxième mode de réalisation, correspondant à un lissage polynomial de degré 4 ou 5, la valeur $F(i_1, i_2, ..., i_n)$ des points du filtre vaut zéro si $r > s$ et, si $r \leq s$, est proportionnelle à :

$$A_s(r) = (15s^4 + 30s^3 - 35s^2 - 50s + 12) - 35(2s^2 + 2s - 3)r^2 + 63r^4$$

Filtre de différentiation

Selon une deuxième branche de l'invention, le filtre est un filtre de différentiation. Dans cette famille de filtres, les coefficients sont choisis pour opérer une dérivée mathématique.

Selon une forme particulière de réalisation, les coefficients de la méthode de type Savitzky-Golay sont déterminés pour un polynôme d'approximation dont l'ordre de dérivation est un entier supérieur ou égal à 1.

Dans un premier mode de réalisation, correspondant à une dérivée première avec approximation polynomiale de degré 2, la valeur $F(i_1, i_2, ..., i_n)$ des points du filtre vaut zéro si $r > s$ et, si $r \leq s$, est proportionnelle à :

$$A_s(r) = r * signe(i_2)$$

Dans un deuxième mode de réalisation, correspondant à une dérivée première avec une approximation polynomiale de degré 3 ou 4, la valeur $F(i_1, i_2, ..., i_n)$ des points du filtre vaut zéro si $r > s$ et, si $r \leq s$, est proportionnelle à :

$$A_s(r) = \{5(3s^4 + 6s^3 - 3s + 1)r - 7(3s^2 + 3s - 1)r^3\} * signe(i_2)$$

Dans un troisième mode de réalisation, correspondant à une dérivée première avec une approximation polynomiale de degré 5 ou 6, la valeur $F(i_1, i_2, ..., i_n)$ des points du filtre vaut zéro si $r > s$ et, si $r \leq s$, est proportionnelle à :

$$A_s(r) = \{7(25s^8 + 100s^7 - 50s^6 - 500s^5 - 95s^4 + 760s^3 + 180s^2 - 300s + 72)r$$
$$- 105(6s^6 + 18s^5 - 15s^4 - 60s^3 + 17s^2 + 50s - 12)r^3$$
$$+ 33(15s^4 + 30s^3 - 35s^2 - 50s + 12)r^5\} * signe(i_2)$$

Dans un quatrième mode de réalisation, correspondant à une dérivée seconde avec une approximation polynomiale de degré 2 ou 3, la valeur $F(i_1, i_2, ..., i_n)$ des points du filtre vaut zéro si $r > s$ et, si $r \leq s$, est proportionnelle à :

$$A_s(r) = 3r^2 - s(s + 1)$$

Dans un cinquième mode de réalisation, correspondant à une dérivée seconde avec une approximation polynomiale de degré 4 ou 5, la valeur $F(i_1, i_2, ..., i_n)$ des points du filtre vaut zéro si $r > s$ et, si $r \leq s$, est proportionnelle à :

$$A_s(r) = 15(6s^2 + 6s - 5)r^4 - 21(4s^4 + 8s^3 - 4s^2 - 8s + 5)r^2$$
$$+ 5s(2s^5 + 6s^4 - s^3 - 12s^2 - s + 6)$$

Dans un sixième mode de réalisation, correspondant à une dérivée troisième avec une approximation polynomiale de degré 3 ou 4, la valeur $F(i_1, i_2, ..., i_n)$ des points du filtre vaut zéro si $r > s$ et, si $r \leq s$, est proportionnelle à :

$$A_s(r) = \{5r^3 - (3s^2 + 3s - 1)\text{r}\} * signe(i_2)$$

Dans un septième mode de réalisation, correspondant à une dérivée troisième avec une approximation polynomiale de degré 5 ou 6, la valeur $F(i_1, i_2, ..., i_n)$ des points du filtre vaut zéro si $r > s$ et, si $r \leq s$, est proportionnelle à :

$$A_s(r) = \{7(6s^6 + 18s^5 - 15s^4 - 60s^3 + 17s^2 - 50s - 12)r$$
$$- 15(12s^4 + 24s^3 - 28s^2 - 40s + 39)r^3 + 77(2s^2 + 2s - 3)r^5\}$$
$$* signe(i_2)$$

Dans un huitième mode de réalisation, correspondant à une dérivée quatrième avec une approximation polynomiale de degré 4 ou 5, la valeur $F(i_1, i_2, ..., i_n)$ des points du filtre vaut zéro si $r > s$ et, si $r \leq s$, est proportionnelle à :

$$A_s(r) = 3s(s^3 + 2s^2 - s - 2) - 5(6s^2 + 6s - 5)r^2 + 35r^4$$

Dans un neuvième mode de réalisation, correspondant à une dérivée cinquième avec une approximation polynomiale de degré 5 ou 6, la valeur $F(i_1, i_2, ..., i_n)$ des points du filtre vaut zéro si $r > s$ et, si $r \leq s$, est proportionnelle à :

$$A_s(r) = \{(15s^4 + 30s^3 - 35s^2 - 50s + 12)r - 35(2s^2 + 2s - 3)r^3 + 63r^5\}$$
$$* signe(i_2)$$

Il peut être remarqué que la fonction signe intervient uniquement pour les dérivées d'ordre impair. La boule n'est alors plus centrosymétrique mais anticentrosymétrique, car une symétrie centrale transforme la valeur de tout point en sa valeur opposée. La boule du filtre de traitement est alors formée de deux demi-boules antisymétriques.

La valeur $F(i_1, i_2, ..., i_n)$ des points du filtre pour $r \leq s$ est proportionnelle à la valeur $A_s(r)$ telle que définie ci-dessus. Autrement dit :

$$F(i_1, i_2, ..., i_n) = k . A_s(r)$$

où $k$ est un nombre réel.

Le filtre de traitement d'image peut notamment subir un traitement de renormalisation global.

De manière générale, le filtre de traitement d'image est appelé « filtre Half-Ball Savitzky-Golay » ou « filtre HBSG ».

L'invention a également pour objet un procédé de traitement d'image par convolution pour la localisation de gouttes dans une image, comprenant une opération de convolution effectuée entre l'image et le filtre défini ci-dessus.

L'image peut notamment être obtenue par microscopie électronique en transmission, microscopie à sonde atomique, microscopie optique, microscopie de fluorescence, microscopie par force atomique, microscopie à effet tunnel, microscopie par perte d'énergie des rayons X (X-PEEM), microscopie par diffraction électronique, microscopie par diffraction de rayons X, microscopie par diffraction k-PEEM, microscopie par diffraction de neutrons ou toute technique de microscopie ou d'imagerie produisant des gouttes dans l'image.

Le procédé peut comprendre, préalablement à l'opération de convolution, une étape de transformation géométrique du filtre, dans laquelle les points du premier sous-ensemble subissent une transformation géométrique.

La transformation géométrique peut notamment comprendre une rotation des points de la n-boule autour de son centre, une dilatation ou une compression selon l'un des axes de la n-boule, une transformation de type cisaillement, une transformation de type perspective, un gauchissement ou une torsion. La transformation géométrique peut également comprendre un décentrage de la n-boule obtenu en augmentant la taille de l'hyperpavé englobant la n-boule puis en translatant la n-boule à l'intérieur de l'hyperpavé.

Le procédé peut également comprendre une étape de débruitage, une étape de lissage et/ou une étape de soustraction de fond. Chaque étape de débruitage, de lissage et de soustraction de fond comprend alors une opération de convolution effectuée entre l'image et le filtre selon l'invention.

Le procédé peut en outre comprendre successivement une étape de débruitage de l'image, une étape d'augmentation de la résolution de l'image, une étape de lissage de l'image, dans laquelle une opération de convolution est effectuée entre l'image et le filtre selon l'invention, et une étape de soustraction de fond, dans laquelle une valeur moyenne locale de points de l'image est soustraite à la valeur de chaque point.

## BRÈVE DESCRIPTION DES DESSINS

D'autres caractéristiques, détails et avantages de l'invention ressortiront à la lecture de la description qui va suivre, donnée uniquement à titre d'exemple et faisant référence aux dessins annexés sur lesquels :

La figure 1 représente un exemple de filtre de lissage bidimensionnel selon l'invention ;
La figure 2 illustre l'application successive de deux filtres de lissage suivi d'une binarisation selon l'invention sur des images de synthèse présentant différents niveaux de bruit ;
La figure 3 illustre l'application successive de deux filtres de lissage suivi d'une binarisation selon l'invention sur une image expérimentale obtenue par microscopie électronique à transmission haute résolution ;
La figure 4 représente le résultat de la convolution d'une image expérimentale par des filtres de lissage de différentes tailles ;
La figure 5 illustre une méthode de fusion de doublets de spots par un filtre de lissage selon l'invention comportant une hyperboule en forme d'ovoïde ;
La figure 6 illustre la génération d'une image de fond continu par un filtre de lissage selon l'invention ;
La figure 7 représente un exemple de filtre de différentiation bidimensionnel d'ordre 1 selon l'invention ;
La figure 8 illustre l'application d'un filtre de différentiation d'ordre un selon l'invention sur une image expérimentale ;
La figure 9 représente des exemples de filtres de différentiation selon l'invention présentant des hyperboules avec des orientations angulaires distinctes ;
La figure 10 illustre une première méthode de séparation des spots au sein de différentes paires par l'application de deux filtres de différentiation selon l'invention dont les hyperboules sont orientées différemment l'un par rapport à l'autre ;
La figure 11 illustre une deuxième méthode de séparation des spots au sein de différentes paires par l'application d'un seul filtre de différentiation selon l'invention comprenant une hyperboule ovoïdique ;
La figure 12 illustre une méthode de renormalisation locale des images par des filtres de lissage selon l'invention présentant des tailles différentes ;
La figure 13 représente différents exemple de filtres selon l'invention dont la boule a subi une transformation géométrique ;
La figure 14 représente un exemple de procédé de construction d'un filtre de traitement d'image selon l'invention ;
La figure 15 représente un exemple de procédé de traitement utilisant un filtre de traitement d'image selon l'invention.

## DESCRIPTION DÉTAILLÉE

L'invention porte de façon générale sur un filtre de traitement d'image pour la localisation de gouttes dans une image à $n$ dimensions, avec $n \geq 2$. Les gouttes sont également appelées « taches », « blobs », « spots » ou « spikes ». Le filtre de dimension $n$ se caractérise en ce qu'il comprend un ensemble de points définissant un hyperpavé dans un espace à $n$ dimensions, chaque point du filtre étant associé à une valeur numérique. Le filtre comporte un premier sous-ensemble de points formant une n-boule (au sens topologique), et un deuxième sous-ensemble de points comprenant les points n'appartenant pas au premier sous-ensemble. La valeur des points formant la n-boule est déterminée en fonction de coefficients de la méthode de Savitzky-Golay. Le filtre est appelé « Half-Ball Savitzky-Golay », HBSG. Par définition, une n-boule est une boule de dimension $n$. Une 2-boule est donc un disque. La présente invention repose sur une construction originale d'un filtre à $n$ dimensions à partir de la méthode de Savitzky et Golay à une seule dimension. Elle comprend la construction de coefficients calculés d'après cette méthode. Les coefficients successifs de la n-boule sont utilisés pour définir les valeurs des points depuis le centre vers la périphérie de la n-boule. La valeur des points du deuxième sous-ensemble est nulle.

Selon une première branche de l'invention, le filtre peut être utilisé pour un lissage d'une image (dérivation d'ordre zéro). Dans le cas d'un lissage, la boule est centrosymétrique. Par construction, les filtres de dérivation d'ordre pair donnent toujours des boules centrosymétriques. Les filtres de dérivation d'ordre impair donnent des boules anti-centrosymétriques par construction, c'est-à-dire qu'une symétrie centrale transforme chaque point de la boule en son opposé.

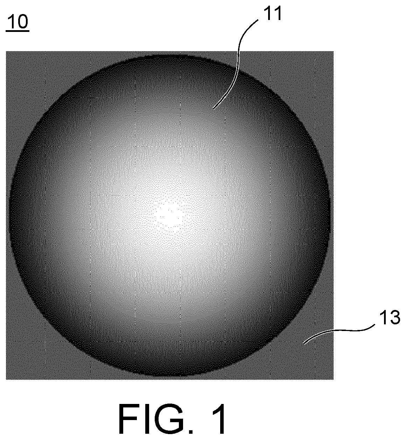

La figure 1 représente un exemple de filtre de lissage bidimensionnel 10 de taille $307 \times 307$ pixels. Le filtre 10 comporte un premier ensemble 11 de pixels formant la 2-boule et un deuxième ensemble 13 de pixels de valeur nulle entourant la boule pour former un carré. Dans le cas du lissage, la boule est centrosymétrique. Le profil radial de la boule est déterminé dans une première étape par la formule suivante :

$$A_s(r) = 3s^2 + 3s - 1 - 5r^2$$

avec par définition $s = (d - 1)/2$, où $d$ est le nombre impair de pixels le long d'un axe de la n-boule, et $r = \sqrt{i_1{}^2 + i_2{}^2}$ est l'éloignement radial par rapport au centre de la boule, avec $i_1$ l'éloignement horizontal et $i_2$ l'éloignement vertical par rapport au centre, $i_1$ et $i_2$ variant de $-s$ à $s$, l'indice 0 correspondant au centre de la 2-boule.

Cette formule provient de la publication de H. H. Madden, « Comments on Savitzky-Golay Convolution Method for Least-Squares Fit Smoothing and Differentiation of Digital Data », Analytical Chemistry, vol. 50, pp. 1383-1386, (1978), et permet de définir le profil de contraste du filtre par rapport à son centre, appelé profil Savitzky-Golay 1D. Cette formule permet d'obtenir un filtre de lissage polynomial de degré 2 ou 3 avec un ordre de dérivation nul (smoothing). Dans l'exemple de la figure 1, $d = 305$, de sorte que le diamètre du disque est inférieur de deux pixels à la taille du filtre 10. La 2-boule est donc inscrite dans le filtre. Le deuxième ensemble 13 de pixels entoure la n-boule pour former un n-hyperpavé. Il comprend notamment les pixels périphériques du filtre 10 formant un contour carré quand $n = 2$. La valeur de chaque pixel du deuxième ensemble 13 est égale à la valeur nulle. Le cadre de pixels de valeur nulle entourant la n-boule permet de s'affranchir des effets de bord et de mettre en relief les spots présents dans l'image. Par construction, le filtre 10 est ensuite normalisé à 1, c'est-à-dire que la somme N de tous les termes est calculée puis chaque terme du filtre est divisé par N. Cette opération présente classiquement l'avantage de conserver la dynamique des niveaux de gris, c'est-à-dire la plage de contrastes de l'image initiale. Cette étape de normalisation permet de ne pas dépasser les valeurs minimales et maximales des niveaux de gris durant la convolution, sachant qu'il est toujours possible d'appliquer par la suite d'autres traitements de normalisation des niveaux de gris sur l'image finale en fonction des besoins. Le filtre est représenté sur la figure 1 après l'étape de normalisation, le gris moyen du troisième ensemble de pixels correspondant à une valeur de contraste nulle.

En deux dimensions, le filtre noté $[F(i_1,i_2)]$ peut s'écrire sous la forme matricielle suivante, avec $F(i_1,i_2)$ les différentes valeurs du filtre :

| $F(-n, n)$ | | ... | $F(0, n)$ | ... | | $F(n, n)$ |
|---|---|---|---|---|---|---|
| ⋮ | | | ⋮ | | | ⋮ |
| | | | $F(0,1)$ | | | |
| | | ... | $F(0,0)$ | $F(1,0)$ | ... | $F(n, 0)$ |
| | | | $F(0, -1)$ | | | |
| ⋮ | | | ⋮ | | | ⋮ |
| $F(-n, -n)$ | | ... | $F(0, -n)$ | ... | | $F(n, -n)$ |

Par construction du filtre HBSG, lorsque $r > s,$ la valeur numérique $F(i_1,i_2)$ du coefficient est nulle et, lorsque $r \leq s$, $F(i_1,i_2)$ est proportionnelle à $A_s(r)$.

En dimension $n,$ le filtre $[F(i_1,i_2,...,i_n)]$ est un tenseur. L'éloignement radial $r$ est la norme euclidienne $r = (\sqrt{i_1{}^2 + i_2{}^2 + \cdots + i_n{}^2}$, où $i_1$, $i_2$ ... $i_n$ définissent les $n$ indices d'éloignement par rapport au centre pour chaque dimension de l'espace. Dans le cas d'un lissage (c'est-à-dire d'une dérivée d'ordre zéro) ou d'une dérivée d'ordre pair, chaque terme $F(i_1,i_2,...,i_n)$ du n-filtre est alors proportionnel à $A_s(r)$ pour $r \leq s$ et vaut zéro pour $r > s$.

Dans un autre exemple de réalisation, la valeur $F(i_1, i_2)$ des termes du filtre pour $r \leq s$ pourrait être déterminée pour être proportionnelle à :

$$A_s(r) = (15s^4 + 30s^3 - 35s^2 - 50s + 12) - 35(2s^2 + 2s - 3)r^2 + 63r^4$$

Cette formule permet d'obtenir un filtre de lissage polynomial de degré 4 ou 5 avec un ordre de dérivation nul.

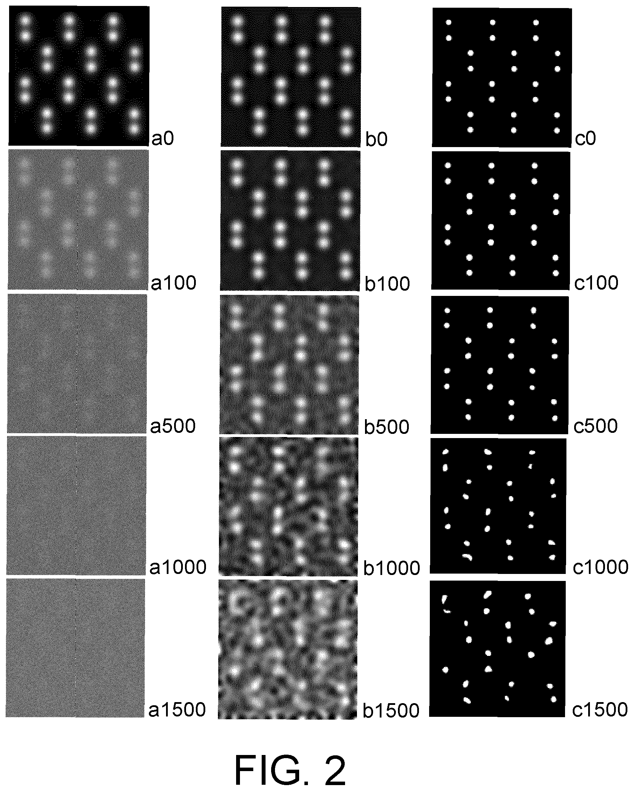

La figure 2 illustre l'application de filtres de lissage selon l'invention sur des images de synthèse présentant différents niveaux de bruit. L'image $a0$ est une image de synthèse sans bruit de taille $750 \times 750$ pixels. Elle comporte des paires de taches réparties spatialement, également appelées « doublets ». L'image $b0$ représente le résultat d'une première convolution de l'image $a0$ par un filtre de lissage polynomial de degré 2 ou 3, d'ordre de dérivation nul et de taille $99 \times 99$ pixels, puis d'une deuxième convolution par un filtre de lissage polynomial de degré 4 ou 5, d'ordre de dérivation nul et de taille $99 \times 99$ pixels. L'image $c0$ représente le résultat d'un seuillage de l'image $b0$, suivi d'une binarisation à l'aide de la méthode Bernsen puis d'une élimination des surfaces inférieures à un seuil de 200 pixels. La méthode Bernsen est décrite dans l'article Bernsen, J (1986), « Dynamic Thresholding of Grey-Level Images », Proc. of the 8th Int. Conf. on Pattern Recognition. Il peut être noté que l'image $b0$ est identique à l'image $a0$, le traitement de convolution laissant l'image $a0$ invariante. La détermination du centroïde des taches dans l'image binaire $c0$ permet ensuite de les localiser précisément. Les images $a100$, $a500$, $a1000$ et $a1500$ sont générées à partir de l'image $a0$ en ajoutant un bruit gaussien d'écart-type 100, 500, 1000 et 1500, respectivement. Les images $b100$, $b500$, $b1000$ et $b1500$ représentent le résultat d'une première convolution de l'image $a100$, $a500$, $a1000$ et $a1500$, respectivement, par le filtre de lissage polynomial de degré 2 ou 3 de taille $99 \times 99$ pixels, puis d'une deuxième convolution par le filtre de lissage polynomial de degré 4 ou 5. Les images $c100$, $c500$, $c1000$ et $c1500$ représentent le résultat d'un seuillage des images $b100$, $b500$, $b1000$ et $b1500$, respectivement, suivi d'une binarisation à l'aide de la méthode Bernsen puis d'une élimination des surfaces inférieures au seuil de 200 pixels. Ce seuil permet de fixer la quantité de spots présents dans l'image, il peut être adapté en fonction de chaque cas particulier. Si on recherche des défauts tels que les atomes interstitiels par exemple, il faut réduire ce seuil pour pouvoir comptabiliser ce type de défaut. Les simulations atomistiques permettent d'évaluer le seuil théorique pour chaque type de défaut. En règle générale, ce seuil est choisi entre la taille minimale de la plus petite tache à conserver et la surface strictement inférieure à celle d'un spot obligatoirement présent dans l'image pour des raisons physiques. Il est également possible de faire un filtrage sur n'importe quel paramètre morphologique des taches, tel que l'ellipticité, le périmètre, le diamètre de Ferret ou tout autre paramètre permettant de trier les taches selon un critère choisi afin d'éliminer les artéfacts indésirables. Il peut être constaté d'après les images de la figure 2 que le traitement de convolution par les filtres selon l'invention permet de mettre en évidence la présence des taches, y compris pour des niveaux de bruit extrêmement élevés.

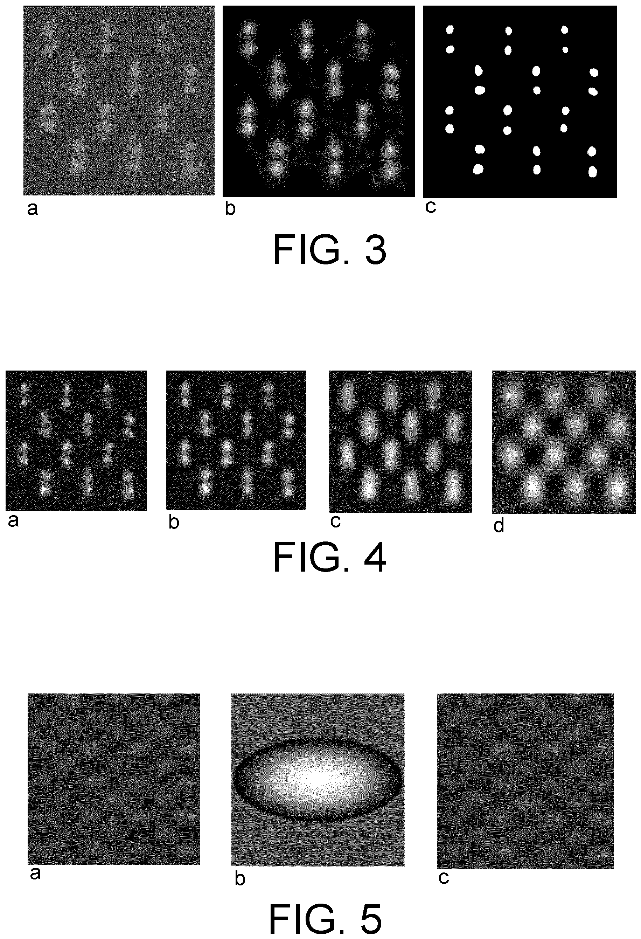

La figure 3 illustre l'application de filtres de lissage selon l'invention sur une image expérimentale obtenue à partir d'un microscope électronique à transmission haute résolution. L'image $a$ représente l'image expérimentale de taille $750 \times 750$ pixels. Elle comporte des paires de taches réparties spatialement. L'image $b$ représente le résultat d'une première convolution de l'image $a$ par un filtre de lissage polynomial de degré 2 ou 3 de taille $69 \times 69$ pixels, puis d'une deuxième convolution par un filtre de lissage polynomial de degré 4 ou 5 de taille $69 \times 69$ pixels. L'image $c$ est obtenue après seuillage puis binarisation Bernsen et permet de confirmer l'efficacité du filtre de lissage pour la détection de spots dans une image, dans le sens où tous les spots attendus sont bien présents et se trouvent à la position théorique correcte pour le silicium observé selon l'axe [110] correspondant à l'image expérimentale $a$.

La figure 4 illustre l'influence de la taille du filtre sur le traitement d'image. Les images $a$, $b$, $c$ et $d$ représentent le résultat de la convolution de l'image $a$ de la figure 3 par un filtre de lissage polynomial de degré 2 ou 3 de taille $31 \times 31$ pixels, $91 \times 91$ pixels, $151 \times 151$ pixels et $211 \times 211$ pixels, respectivement. Il peut être observé que le lissage de degré 2 ou 3 est de plus en plus étendu avec un filtre de taille croissante, les contrastes de l'image s'étalant et les détails les plus fins, notamment les fluctuations rapides de contraste dues au bruit, étant supprimés. Les filtres de lissage selon l'invention offrent ainsi une sélectivité de taille des spots à cibler. La taille optimale du filtre de lissage permet de supprimer un maximum de fluctuations rapides de signal tout en conservant l'information utile, c'est-à-dire la position et la forme des taches principales. De manière générale, la taille optimale du filtre de lissage est égale à la taille des taches à localiser.

Dans les images mesurées par microscopie électronique en transmission à haute résolution, de nombreux facteurs contribuent à fusionner les deux taches de chaque doublet dans les images, comme la résolution instrumentale insuffisante, les vibrations, l'agitation thermique, les bruits électromagnétiques, les rayons cosmiques, le désordre induit par la préparation d'échantillon, la dégradation de l'échantillon provenant de l'irradiation électronique, etc. Par exemple dans le cas du silicium, les doublets de taches, appelés « dumbells », apparaissent uniquement si la résolution est suffisante ; sinon, ils se fusionnent et apparaissent comme une tache unique. Bien souvent, il devient impossible de discerner les taches voisines. Dans un tel cas, il devient avantageux de forcer la fusion des taches pour obtenir la position précise de leur centroïde, c'est-à-dire le centre de gravité de la somme des deux taches susceptibles de fusionner. L'image $c$ de la figure 4 montre qu'il est possible de fusionner les taches voisines par convolution avec le filtre de lissage de taille $151 \times 151$ pixels. Cette fusion permet, après seuillage, de déterminer la position du centroïde des doublets fusionnés.

Une autre méthode de fusion des doublets consiste à utiliser un filtre de lissage de degré 2 ou 3 elliptique. La figure 5 illustre une telle méthode. L'image *a* représente une image brute de 400 × 400 pixels comportant des doublets de taches dans chacun desquels les taches sont alignées horizontalement. L'image *b* représente un filtre de lissage polynomial de degré 2 ou 3 de taille 93 × 93 pixels, dont la boule centrale présente une forme elliptique de taille 91 × 45 pixels. Ce filtre de lissage peut être obtenu par homothétie horizontale de rapport ½ d'un filtre de lissage polynomial de degré 2 ou 3 de taille 93 × 93 pixels, dont la boule centrale présente une taille de 91 × 91 pixels. La valeur zéro est attribuée aux pixels manquants après homothétie, afin d'obtenir au final une matrice rectangulaire. L'image *c* représente le résultat de la convolution de l'image *a* par le filtre de lissage représenté sur l'image *b*. Elle met en évidence la fusion des deux taches dans chaque doublet.

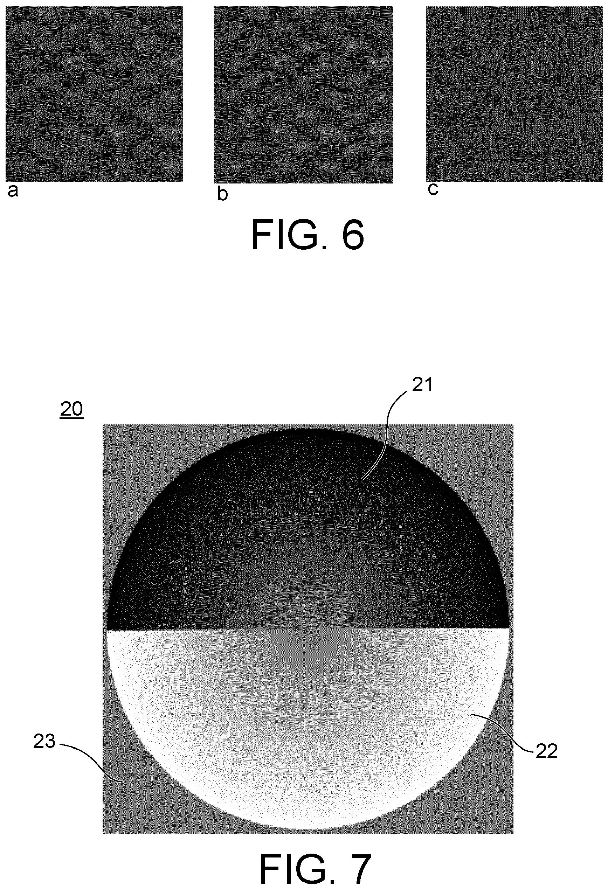

Le filtre de lissage selon l'invention permet également de générer, à partir d'une image de départ, une image dite de fond continu, pour laquelle les gouttes ont diffusé dans le bruit ambiant et la valeur de chaque pixel est sensiblement égale à une moyenne locale des valeurs des pixels de l'image de départ. Pour ce faire, la taille du filtre de lissage doit être sensiblement égale à la distance maximale entre deux taches voisines. La figure 6 illustre la génération d'une image de fond continu. L'image *a* de la figure 6 est identique à l'image brute *a* de la figure 5. Dans cette image, les doublets voisins sont espacés les uns des autres d'environ 125 pixels. Les images *b* et *c* représentent le résultat de la convolution de l'image *a* par un filtre de lissage polynomial de degré 2 ou 3 de taille 31 × 31 pixels et 125 × 125 pixels, respectivement. Il peut être observé sur la figure 6 que l'image *c* permet de lisser suffisamment l'image *a* pour obtenir une image du signal diffus moyen.

Selon une deuxième branche de l'invention, le filtre peut être utilisé pour une différentiation entre deux éléments d'une image, en particulier deux taches voisines. Dans le cas d'une différentiation d'ordre 1 (c'est-à-dire d'une dérivée première), la boule centrale comporte deux ensembles de points présentant des valeurs opposées, de sorte à former deux demi-boules présentant des valeurs antisymétriques par rapport au centre de la boule.

La figure 7 représente un exemple de filtre de différentiation bidimensionnel 20 de taille 307 × 307 pixels. Le filtre 20 comporte un premier ensemble 21 de pixels formant une première n-demi-boule, un deuxième ensemble 22 de pixels formant une deuxième n-demi-boule et un troisième ensemble 23 de pixels nuls périphériques qui complètent le filtre. Ce dernier ensemble permet de compléter l'espace pour obtenir un n-hyperpavé. Les premier et deuxième demi-disques 21, 22 forment le disque de différentiation. La valeur $F(i_1, i_2)$ des pixels du premier demi-disque 21 est déterminée à partir de la formule suivante :

$$A_s(r) = r$$

où $r = \sqrt{i_1^2 + i_2^2}$ est l'éloignement radial par rapport au centre de la boule, les indices $i_1$ (horizontal) et $i_2$ (vertical) variant de -*s* à *s*, l'indice $r = 0$ correspondant au centre du demi-disque et $s = (d - 1)/2$, *d* étant le diamètre impair du demi-disque.

La valeur $F(i_1, i_2)$ des pixels du deuxième demi-disque 22 est déterminée à partir de la formule suivante :

$$A_s(r) = -r$$

où *r* est défini comme précédemment.

En fusionnant les deux formules précédentes de $A_s(r)$, on obtient la formule générale suivante pour décrire la boule complète anti-centrosymétrique :

$$A_s(r) = r * signe\ (i_2)$$

où *signe*(*x*) est la fonction signe et vaut +1 pour $x \geq 0$ et -1 pour $x < 0$.

Cette formule générale permet d'obtenir un filtre de différentiation d'ordre 1 approximé par un polynôme de degré 2. En 1D, ce filtre correspond à l'appellation « convolute first derivative quadratic » dans la publication originale de Savitzky et Golay. Dans l'exemple de la figure 7, *s* = 152, de sorte que le diamètre du disque est inférieur de deux pixels à la taille du filtre 20. Le troisième ensemble 23 de pixels entoure le disque (21 + 22) avec des zéros pour former un filtre carré. Ce troisième ensemble 23 entourant le disque (21+ 22) permet de s'affranchir des effets de bord et de mettre en relief les spots présents dans l'image qui se détachent du bruit environnant. Dans une deuxième étape, le filtre 20 est normalisé à 1, c'est-à-dire que la valeur de chacun de ses pixels est divisée par la somme des valeurs de l'ensemble des pixels des trois ensembles.

Dans un autre exemple de réalisation, la valeur $F(i_1, i_2)$ des pixels du premier et du deuxième demi-disque pourrait être déterminée dans une première étape à partir des formules respectives suivantes :

pour la 2-demi boule supérieure :

$$A_s(r) = 5(3s^4 + 6s^3 - 3s + 1)r - 7(3s^2 + 3s - 1)r^3$$

pour la 2-demi-boule inférieure :

$$A_s(r) = -5(3s^4 + 6s^3 - 3s + 1)r + 7(3s^2 + 3s - 1)r^3$$

Ces formules permettent d'obtenir un filtre de différentiation d'ordre 1 (dérivée première), approximé par un polynôme de degré 3 ou 4. En fusionnant les deux formules précédentes de $A_s(r)$, cette construction donne la formule généralisée :

pour $r > s$ :

$$A_s(r) = 0$$

et pour $r \leq s$ :

$$A_s(r) = \{5(3s^4 + 6s^3 - 3s + 1)r - 7(3s^2 + 3s - 1)r^3\} * signe(i_2)$$

Le filtre est également normalisé à 1 pour conserver la dynamique originale des niveaux de gris.

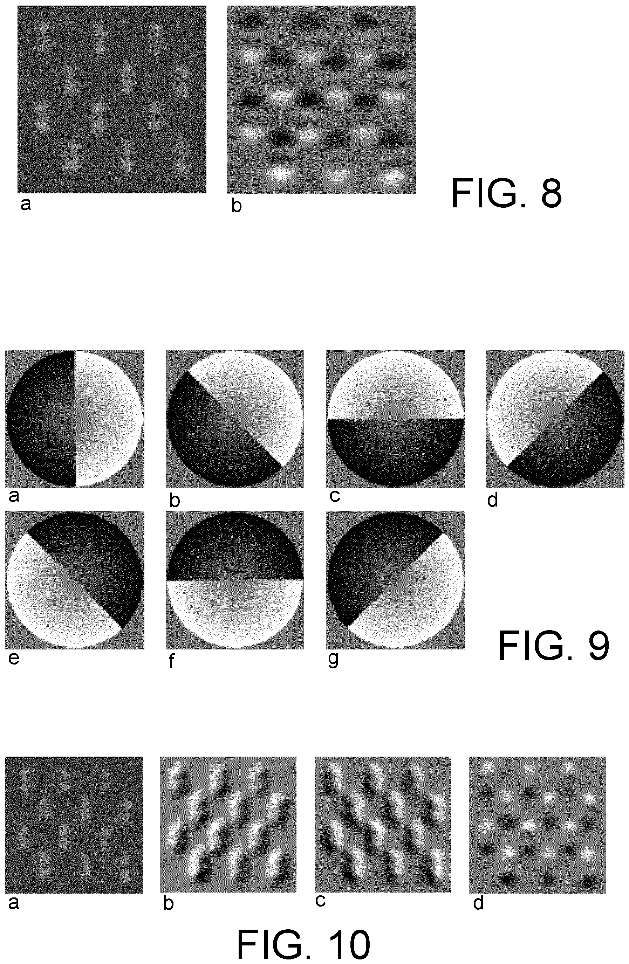

La figure 8 illustre l'application d'un filtre de différentiation selon l'invention sur une image expérimentale. L'image *a* est une image expérimentale de taille $750 \times 750$ pixels comportant des paires de taches réparties spatialement. Dans chaque paire, les taches sont alignées selon un axe vertical. L'image *b* représente le résultat d'une convolution de l'image *a* par un filtre de différentiation polynomial de degré 2, d'ordre de dérivation égal à 1 (dérivée première) et de taille $69 \times 69$ pixels. Les deux demi-disques du filtre sont agencés avec un axe de séparation horizontal. La figure 8 illustre la possibilité de séparer les spots d'une image en réduisant fortement le niveau de bruit de l'image à l'aide d'une seule opération de différentiation verticale.

La boule centrale d'un filtre de différentiation peut subir une rotation afin de contrôler le type de différentiation souhaité et ainsi mettre en évidence des spots alignés selon d'autres directions que l'axe horizontal et l'axe vertical. La figure 9 représente un filtre de différentiation polynomial de degré 2, d'ordre de dérivation égal à 1 et de taille $99 \times 99$, dont la boule centrale est positionnée selon sept orientations angulaires distinctes. Sur chacune des images *a, b, c, d, e, f* et *g* la boule comporte deux demi-disques 31, 32 dont les valeurs de pixels sont opposées par rapport au centre. Sur l'image *a*, le premier demi-disque 31 se trouve sur la droite du filtre et le deuxième demi-disque 32 se trouve sur la gauche du filtre, l'axe de symétrie étant vertical. Sur chacune des images *b, c, d, e, f* et *g*, la boule a successivement subi une rotation de 45° autour de son centre dans le sens trigonométrique, ce qui permet de fixer la direction de la différentiation.

La combinaison de plusieurs filtres de différentiation permet de séparer les taches au sein des différentes paires. La figure 10 illustre une telle séparation des taches dans une image expérimentale à l'aide de deux filtres de différentiation distincts. L'image *a* représente l'image expérimentale de taille $750 \times 750$ pixels comprenant des paires de taches, dans chacune desquelles les taches sont alignées selon un axe vertical. L'image *b* de la figure 10 représente le résultat d'une convolution de l'image *a* par le filtre représenté sur l'image *d* de la figure 9 et l'image *c* représente le résultat d'une convolution de l'image *a* par le filtre représenté sur l'image *b* de la figure 9. L'image *d* représente la somme des images *b* et *c*. Il peut être remarqué qu'au sein de chaque paire de taches de l'image *d,* l'une des taches est noire et l'autre tache est blanche. Les taches initiales sont ainsi scindées en deux familles plus espacées qu'il est possible d'analyser séparément, par exemple pour estimer leur position précise.

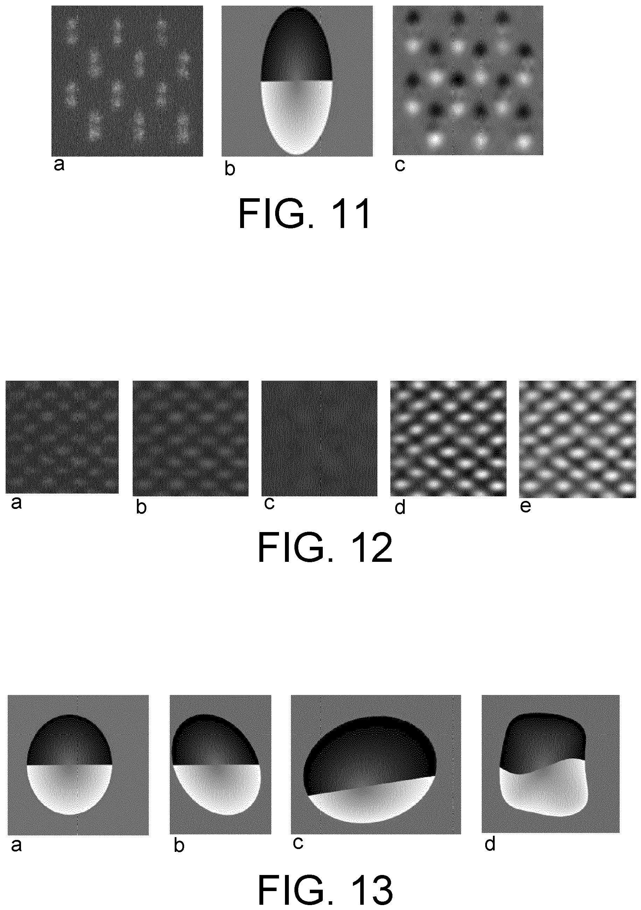

La boule du filtre de différentiation peut subir une transformation géométrique de sorte à présenter une forme non circulaire. En particulier, la boule centrale peut subir une homothétie selon l'un des axes pour passer d'une forme circulaire à une forme elliptique. Une telle forme permet également de séparer les taches d'un doublet en une seule opération de convolution. La figure 11 illustre l'utilisation d'un filtre de différentiation comprenant une boule elliptique. L'image *a* représente la même image expérimentale que l'image *a* de la figure 10. L'image *b* représente un filtre bidimensionnel de taille $125 \times 125$ pixels comprenant une boule de taille $60 \times 123$ pixels. L'image *c* représente le résultat de la convolution de l'image *a* par le filtre *b*.

La transformation géométrique peut être appliquée aux filtres de toute dimension. En particulier, pour *n* = 3, l'ellipse périphérique est remplacée par un ellipsoïde constitué de deux demi-coques. Sa construction comprend la formation d'une boule sphérique constituée de deux demi-boules, puis l'application d'homothéties selon au moins l'un des axes de la boule. L'espace périphérique autour de la boule est ensuite comblé par des zéros afin d'obtenir une enveloppe cubique.

Les filtres de traitement d'image selon l'invention permettent par ailleurs de réaliser une renormalisation locale des images. Ce traitement consiste à soustraire le fond continu d'une image et à mettre tous les détails de l'image dans une même plage de contraste. De cette manière, même les petits détails les plus sombres de l'image deviennent visibles. La figure 12 illustre ce traitement de renormalisation. L'image *a* représente la même image brute de 400 × 400 pixels que l'image *a* des figures 5 et 6. L'image *b* correspond à l'image *c* de la figure 5 et représente le résultat de la convolution de l'image *a* par un filtre de lissage polynomial de degré 2 ou 3 de taille 93 × 93 pixels, dont la boule présente une forme elliptique de taille 91 × 45 pixels. L'image *c* correspond à l'image *c* de la figure 6 et représente le résultat de la convolution de l'image *a* par un filtre de lissage polynomial de degré 2 ou 3 de taille 125 × 125 pixels. L'image *d* représente le résultat de la soustraction de l'image *b* par l'image *c*. L'image *e* représente le résultat de la division de l'image *d* par la variance locale de l'image. Classiquement, la variance locale de l'image est obtenue en calculant la racine carrée de la convolution par une gaussienne du carré de l'image. Dans ce cas précis, la variance locale est la racine carrée de la convolution par une gaussienne de dimension 20 du carré de l'image. Plus généralement, la dimension du kernel gaussien utilisé pour calculer la variance locale est choisie de préférence à environ les deux tiers de la largeur maximale des spots pour un résultat optimal. De manière générale, pour obtenir une image localement normalisée *I*, on peut utiliser la formule :

$$I = \frac{HBSG_{lissage\,fin} - HBSG_{fond}}{variance\ locale}$$

où $HBSG_{lissage\,fin}$ représente l'image obtenue après un lissage qui préserve les taches significatives de l'image, c'est-à-dire obtenue avec une dimension de n-boule proche de la taille de la goutte recherchée, et $HBSG_{fond}$ représente l'image du fond continu obtenue par un filtre de lissage suffisamment étendu pour représenter un niveau de contraste de base dans l'image, c'est-à-dire obtenue avec une dimension de n-boule proche de la distance maximale entre 2 gouttes voisines. Il est par ailleurs possible de générer une image *I* dans laquelle les détails de l'image sont mis en relief en utilisant la formule suivante :

$$I = HBSG_{n1}(image) - HBSG_{n2}(image)$$

où *n*1 et *n*2 représentent la taille du filtre, avec *n*2 > *n*1.

Comme indiqué précédemment, la boule du filtre peut subir différentes transformations géométriques. La figure 13 illustre différents exemples de transformations géométriques appliquées à un filtre de différentiation à deux dimensions. L'image *a* de la figure 13 représente le filtre de différentiation de la figure 7 après transformation géométrique d'élargissement du pourtour suivi d'une translation de la boule ; l'image *b* représente le filtre de l'image *a* de la figure 13 après une transformation géométrique de type cisaillement; l'image *c* représente le filtre de l'image *a* de la figure 13 après une transformation géométrique de type perspective ; et l'image *d* représente le filtre de l'image *a* de la figure 13 après une transformation géométrique de type gauchissement.

Les homothéties dans l'espace réel de filtres de taille impaire permettent de générer des filtres de taille paire si besoin. La plage dynamique de l'image convoluée peut évidemment s'ajuster en multipliant tous les termes du filtre par un coefficient de renormalisation arbitraire. Toutes les variantes évidentes (pour l'homme du métier) obtenues à partir d'un filtre de convolution sont évidemment incluses dans cette invention.

Par ailleurs, le filtre peut être modifié de différentes manières. Dans une première variante de réalisation, la boule du filtre est décentrée par rapport au contour du filtre. Dans une deuxième variante de réalisation, le filtre est tronqué, de manière à ne comporter qu'une partie de la boule. Dans une troisième variante de réalisation, un flou gaussien est appliqué au filtre.

Les différents exemples de filtres de traitement d'image décrits ci-dessus présentent une forme de carré ou, plus généralement, de n-hypercube. Néanmoins, les filtres de traitement selon l'invention peuvent présenter une forme d'hyperpavé englobant la n-boule. Dans une variante de réalisation, la taille de l'hyperpavé est ajustée à la taille de la n-boule. Selon chaque dimension du filtre, la taille de l'hyperpavé peut être supérieure de deux points à la longueur de chaque axe de la boule, de sorte à laisser un contour d'épaisseur d'un point autour de la boule.

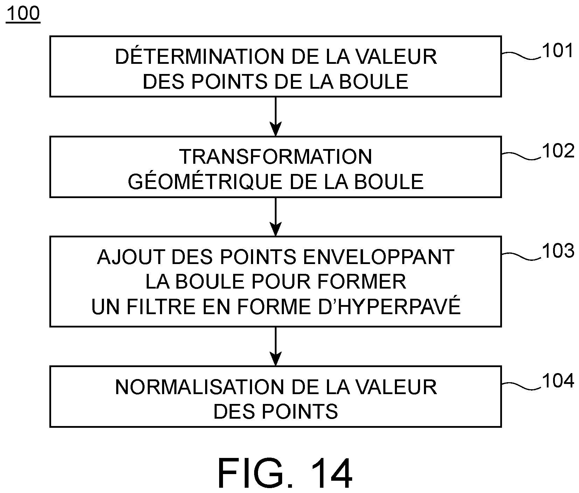

La figure 14 représente un exemple de procédé de construction d'un filtre de traitement d'image selon l'invention.

Dans une première étape 101, la valeur $F(i_1, i_2)$ de chaque point de la boule, c'est-à-dire pour $r \leq s$, est déterminée en fonction d'une méthode de type Savitzky-Golay. Toute formule présentée dans la description ou toute formule dérivée d'une méthode de type Savitzky-Golay peut être utilisée pour calculer les valeurs $A_s(r)$. Dans une deuxième étape 102, optionnelle, la boule subit une transformation géométrique. La forme de la boule peut notamment être adaptée à la forme des taches recherchées. À titre d'exemple, la boule peut prendre une forme d'ovoïde de révolution pour identifier des gouttes ovoïdales. Dans une troisième étape 103, des points enveloppant la boule sont ajoutés pour former un filtre en forme d'hyperpavé et la valeur $F(i_1, i_2, ..., i_n)$ de ces points, c'est-à-dire pour $r > s$, est fixée à zéro. Dans une quatrième étape 104, optionnelle, les valeurs des points du filtre sont normalisées à la valeur 1, en divisant la valeur de chaque point par la somme N des valeurs des points de l'ensemble du filtre. Cette normalisation permet de conserver la dynamique des niveaux de gris initiale. Toutes les palettes des traitements d'analyse d'image et notamment de normalisation peuvent être appliquées par la suite si besoin. Par exemple, un changement de plage dynamique revient à multiplier le filtre par une constante. Ces modifications des coefficients du filtre par un traitement connu sont évidemment incluses dans la présente invention.

Le filtre ainsi construit peut être utilisé dans un traitement d'image, notamment pour la recherche de gouttes dans un hyperespace, notamment de taches dans une image bidimensionnelle. En particulier, il est possible d'effectuer une convolution de l'image multidimensionnelle avec le filtre HBSG. Il est à noter que le traitement d'image peut comporter la construction de plusieurs filtres différents. Selon une première forme de réalisation, des produits de convolution itératifs sont calculés entre l'image et les différents filtres. Selon une deuxième variante de réalisation, différents produits de convolution sont calculés indépendamment les uns des autres entre l'image et les différents filtres, et une nouvelle image est générée comme combinaison linéaire des résultats.

Le filtre de traitement d'image peut en particulier être utilisé pour la génération d'une image super-résolue dite HBSG à partir d'une image initiale comportant un ensemble de taches qui se détachent du fond continu. L'image initiale est formée d'un ensemble de pixels (2D) ou de points d'un n-hyperpavé (nD) associés chacun à une valeur numérique représentant un niveau de gris. Elle est par exemple obtenue par microscopie électronique en transmission, par microscopie à force atomique, par microscopie à effet tunnel ou par microscopie ionique à effet de champ. L'image super-résolue HBSG est très utile car elle est très proche d'une image simulée parfaite. Le traitement de super-résolution HBSG permet donc en définitive de transformer une image expérimentale en une image très proche d'une simulation numérique parfaite.

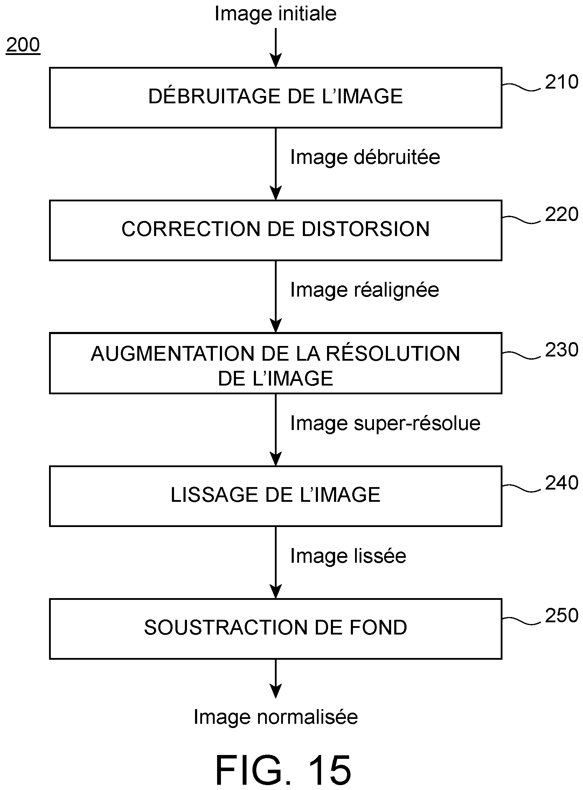

La figure 15 représente un exemple de procédé de traitement comprenant un ensemble d'étapes permettant d'aboutir à l'image super-résolue HBSG. Dans cet exemple, le procédé de traitement 200 comprend successivement une étape 210 de débruitage de l'image initiale, donnant une image débruitée, une étape 220 de correction de distorsion, donnant une image réalignée, une étape 230 d'augmentation de la résolution de l'image réalignée, donnant une image super-résolue, une étape 240 de lissage de l'image super-résolue, donnant une image lissée et une étape 250 de soustraction de fond, donnant une image normalisée. L'étape 250 de soustraction de fond est optionnelle.

L'étape 210 de débruitage peut être réalisée à l'aide de différents traitements de débruitage appliqués sur l'image initiale. En particulier, il est possible d'utiliser la technique de débruitage de type « moyennes non locales », appelée « non-local means » en anglais, décrite dans l'article A. Buades et al : « A review of image denoising algorithms, with a new one », Multiscale Modeling and Simulation, 4 (2005), 490-530. Un autre traitement classique consiste à passer l'image dans le domaine fréquentiel par un transformée de Fourier, afin de lui appliquer un filtre passe-bande, avant d'appliquer une transformée de Fourier inverse. Il est également possible d'utiliser les méthodes de débruitage détaillées dans l'article Goyal, Bhawna et al : « Image Denoising Review: From classical to state-of-the-art approaches », Information Fusion, 55. Plus généralement, le traitement de débruitage peut s'appuyer sur des méthodes dans le réseau réel (spatial domain), des méthodes dans un domaine transformé (transform domain methods), des méthodes dans les domaines statistiques (statistical domain methods), des méthodes hybrides et des méthodes de type intelligence artificielle. Dans un hyperespace de dimension quelconque, le débruitage au moyen d'une convolution par un filtre de lissage tel que décrit ci-dessus sera utilisé de manière préférentielle.

L'étape 220 de correction de distorsion est réalisée sur l'image débruitée. Le cas échéant, elle peut être réalisée directement sur l'image initiale. Elle vise à corriger les distorsions résiduelles dans l'image liées à de nombreux facteurs tels que les aberrations optiques du microscope, les déformations de l'échantillon sous l'effet de la préparation d'échantillon ou la dérive temporelle (drift) de l'échantillon durant la mesure. La correction de ces distorsions résiduelles est réalisée en déterminant au préalable la transformation permettant de ramener un échantillon de référence à sa forme théorique. Par exemple, pour retrouver la forme parfaite du silicium, il est possible d'effectuer sur l'image une transformation affine ou de type perspective pour retrouver la forme attendue. Toute l'image initiale ou, le cas échéant, l'image débruitée, est déformée en appliquant la transformation déterminée à partir d'une région d'intérêt d'une zone de référence. De préférence, l'image est réalignée de manière à obtenir des alignements horizontaux et verticaux parfaits des motifs dans l'image, ce qui facilite la suite des traitements. Il existe une large palette de corrections de distorsions qu'il convient d'appliquer au cas par cas pour retrouver la forme parfaite de l'échantillon de référence. La transformation la plus générale est une distorsion élastique, susceptible de corriger notamment les aberrations optiques. Cette même distorsion permet de corriger toute l'image, et notamment la zone à analyser obtenue dans les mêmes conditions de mesure que la référence. Il est possible d'effectuer des traitements avancés sur une séquence d'images pour améliorer le résultat, par exemple avec la technique RevSTEM (X. Sang, J. M. LeBeau : « Revolving scanning transmission electron microscopy : correcting sample drift distorsion without prior knowledge », Ultramicroscopy 1338, 28-35 (2014)).

L'étape 230 d'augmentation de la résolution est réalisée sur l'image réalignée. Le cas échéant, elle peut être réalisée directement sur l'image initiale ou sur l'image débruitée. Elle peut notamment être réalisée par interpolation, à l'aide d'une technique de reconstruction de surface, ou une technique de variation totale, appelée « total variation » en anglais. Les méthodes de type variation totale sont notamment détaillées dans les articles L. I. Rudin et al : « Nonlinear total variation based noise removal algorithms », Physica D, 60 (1), 259-268 (1992), T. Chan et al, « High order total variation-based image restoration », SIAM J. Sci. Comput., 22 (2), 503-516 (2000) et G. Chantas et al : « Variational Bayasian image restoration with a product of spatially weighted total variation image priors », IEEE Trans. Image Proc., 19 (2), 351-362, (2010). Ces méthodes présentent l'avantage de bien préserver les contours. L'étape 230 d'augmentation de la résolution est facultative. Elle peut être omise si l'image initiale présente déjà une résolution spatiale suffisante. Quand elle est réalisée, elle permet d'obtenir une image super-résolue qui présente en soi une utilité pour la comparaison avec des modélisations et des simulations atomistiques, puisqu'elle présente une résolution spatiale accrue par rapport à l'image initiale.

L'étape 240 de lissage est réalisée sur l'image super-résolue. Le cas échéant, elle peut être réalisée directement sur l'image initiale, sur l'image débruitée ou sur l'image réalignée. L'étape 240 de lissage comprend une sous-étape dans laquelle au moins une opération de convolution est effectuée entre l'image super-résolue et le filtre de lissage selon l'invention décrit ci-dessus. L'étape 240 de lissage permet de lisser l'image. Elle peut également supprimer une partie du bruit afin de se rapprocher d'une image théorique idéale.

L'étape 250 de soustraction de fond est réalisée sur l'image lissée. Le cas échéant, elle peut être réalisée directement sur l'image initiale, sur l'image débruitée, sur l'image réalignée ou sur l'image super-résolue. Cette étape 250 comprend par exemple une sous-étape dans laquelle la valeur moyenne locale de points de l'image considérée est soustraite à la valeur de chaque point. Cette sous-étape est par exemple réalisée en soustrayant de l'image lissée finement, c'est-à-dire avec une taille de boule égale à la plus petite taille de taches à analyser, l'image du fond obtenue à l'aide d'un filtre de lissage de relativement grande dimension, c'est-à-dire dont la taille de la boule centrale correspond à la distance maximale entre deux taches voisines. L'image ainsi obtenue est appelée « image soustraite ». L'étape 250 peut en outre comprendre une sous-étape dans laquelle l'image soustraite est divisée par une image de la variance locale pour donner l'image normalisée. L'image de la variance locale est obtenue en calculant la racine carrée de la convolution par un filtre gaussien du carré de l'image. De manière générale, la dimension du filtre gaussien utilisé pour calculer la variance locale peut représenter environ les deux tiers de la largeur maximale des motifs. Ainsi, pour un motif de taille $31 \times 31$ pixels, la dimension du filtre gaussien peut être égale à 20 pixels.

**Revendications**

1.  Filtre de traitement d'image (10, 20) par convolution pour la localisation de gouttes dans une image obtenue par microscopie, le filtre et l'image étant chacun formés d'un ensemble de points définissant un n-hyperpavé dans un espace à $n$ dimensions, $n$ étant un entier supérieur ou égal à deux, chaque point du filtre et de l'image étant associé à une valeur numérique, le filtre comportant un premier sous-ensemble (11, 21, 22) de points formant une n-boule et un deuxième sous-ensemble (13, 23) de points comprenant les points n'appartenant pas au premier sous-ensemble, la valeur des points du premier sous-ensemble étant déterminée, depuis le centre vers la périphérie de la n-boule, en fonction de coefficients calculés par une méthode d'approximation polynomiale de type Savitzky-Golay, la valeur des points du deuxième sous-ensemble étant nulle.

2.  Filtre selon la revendication 1, dans lequel la n-boule est centrosymétrique, les points situés à une même distance d'un centre de ladite n-boule étant associés à une même valeur.

3.  Filtre selon l'une des revendications 1 et 2, dans lequel la valeur $F(i_1,i_2,...,i_n)$ de ses points vaut zéro si $r > s$ et, si $r \leq s$ est proportionnelle à :

$$A_s(r) = 3s^2 + 3s - 1 - 5r^2$$

avec par définition

s = (*d* - 1)/2, où d représente le diamètre impair de la n-boule, et

$$r = \sqrt{i_1{}^2 + i_2{}^2 + \cdots + i_n{}^2}$$ , où $i_1$, $i_2$ ... $i_n$ définissent les *n* indices d'éloignement par rapport au centre de la n-boule pour chaque dimension de l'espace du filtre, ces indices d'éloignement étant des nombres entiers variant entre -*s* et *s*.

4. Filtre selon l'une des revendications 1 et 2, dans lequel la valeur $F(i_1, i_2, ..., i_n)$ de ses points vaut zéro si $r > s$ et, si $r \le s$ est proportionnelle à :

$$A_s(r) = (15s^4 + 30s^3 - 35s^2 - 50s + 12) - 35(2s^2 + 2s - 3)r^2 + 63r^4$$

avec par définition

$s$ = (d - 1)/2, où d représente le diamètre impair de la n-boule, et

$$r = \sqrt{i_1{}^2 + i_2{}^2 + \cdots + i_n{}^2}$$ , où $i_1$, $i_2$ ... $i_n$ définissent les *n* indices d'éloignement par rapport au centre de la n-boule pour chaque dimension de l'espace du filtre, ces indices d'éloignement étant des nombres entiers variant entre -*s* et *s*.

5. Filtre selon la revendication 1, dans lequel la valeur $F(i_1, i_2, ..., i_n)$ de ses points vaut zéro si $r > s$ et, si $r \le s$ est proportionnelle à :

$$A_s(r) = r * signe(i_2)$$

avec par définition

$s$ = (*d* - 1)/2, où *d* représente le diamètre impair de la n-boule,

$$r = \sqrt{i_1{}^2 + i_2{}^2 + \cdots + i_n{}^2}$$ , où $i_1$, $i_2$ ... $i_n$ définissent les *n* indices d'éloignement par rapport au centre de la n-boule pour chaque dimension de l'espace du filtre, ces indices d'éloignement étant des nombres entiers variant entre -*s* et *s*, et
*signe(x)* est la fonction signe et vaut +1 pour $x \ge 0$ et -1 pour $x < 0$.

6. Filtre selon la revendication 1, dans lequel la valeur $F(i_1, i_2, ..., i_n)$ de ses points vaut zéro si $r > s$ et, si $r \le s$ est proportionnelle à :

$$A_s(r) = \{5(3s^4 + 6s^3 - 3s + 1)r - 7(3s^2 + 3s - 1)r^3\} * signe(i_2)$$

avec par définition

$s$ = (*d* - 1)/2, où *d* représente le diamètre impair de la n-boule,

$$r = \sqrt{i_1{}^2 + i_2{}^2 + \cdots + i_n{}^2}$$, où $i_1$, $i_2$ ... $i_n$ définissent les *n* indices d'éloignement par rapport au centre de la n-boule pour chaque dimension de l'espace du filtre, ces indices d'éloignement étant des nombres entiers variant entre -*s* et *s*, et
*signe(x)* est la fonction signe et vaut +1 pour $x \ge 0$ et -1 pour $x < 0$.

7. Filtre selon la revendication 1, dans lequel la valeur $F(i_1, i_2, ..., i_n)$ de ses points vaut zéro si $r > s$ et, si $r \le s$ est proportionnelle à :

$$A_s(r) = \{7(25s^8 + 100s^7 - 50s^6 - 500s^5 - 95s^4 + 760s^3 + 180s^2 - 300s + 72)r$$
$$- 105(6s^6 + 18s^5 - 15s^4 - 60s^3 + 17s^2 + 50s - 12)r^3$$
$$+ 33(15s^4 + 30s^3 - 35s^2 - 50s + 12)r^5\} * signe(i_2)$$

avec par définition

$s = (d - 1)/2$, où d représente le diamètre impair de la n-boule,

$$r = \sqrt{i_1^2 + i_2^2 + \cdots + i_n^2}$$, où $i_1$, $i_2$ ... $i_n$ définissent les n indices d'éloignement par rapport au centre de la n-boule pour chaque dimension de l'espace du filtre, ces indices d'éloignement étant des nombres entiers variant entre -s et s, et

signe(x) est la fonction signe et vaut +1 pour $x \geq 0$ et -1 pour $x < 0$.

**8.** Filtre selon la revendication 1, dans lequel la valeur $F(i_1, i_2, ..., i_n)$ de ses points vaut zéro si $r > s$ et, si $r \leq s$ est proportionnelle à :

$$A_s(r) = 3r^2 - s(s + 1)$$

avec par définition

$s = (d - 1)/2$, où d représente le diamètre impair de la n-boule, et

$$r = \sqrt{i_1^2 + i_2^2 + \cdots + i_n^2}$$, où $i_1$, $i_2$ ... $i_n$ définissent les n indices d'éloignement par rapport au centre de la n-boule pour chaque dimension de l'espace du filtre, ces indices d'éloignement étant des nombres entiers variant entre -s et s.

**9.** Filtre selon la revendication 1, dans lequel la valeur $F(i_1, i_2, ..., i_n)$ de ses points vaut zéro si $r > s$ et, si $r \leq s$ est proportionnelle à :

$$A_s(r) = 15(6s^2 + 6s - 5)r^4 - 21(4s^4 + 8s^3 - 4s^2 - 8s + 5)r^2$$
$$+ 5s(2s^5 + 6s^4 - s^3 - 12s^2 - s + 6)$$

avec par définition

$s = (d - 1)/2$, où d représente le diamètre impair de la n-boule, et

$$r = \sqrt{i_1^2 + i_2^2 + \cdots + i_n^2}$$, où $i_1$, $i_2$ ... $i_n$ définissent les n indices d'éloignement par rapport au centre de la n-boule pour chaque dimension de l'espace du filtre, ces indices d'éloignement étant des nombres entiers variant entre -s et s.

**10.** Filtre selon la revendication 1, dans lequel la valeur $F(i_1, i_2, ..., i_n)$ de ses points vaut zéro si $r > s$ et, si $r \leq s$ est proportionnelle à :

$$A_s(r) = \{5r^3 - (3s^2 + 3s - 1)r\} * signe(i_2)$$

avec par définition

$s = (d - 1)/2$, où d représente le diamètre impair de la n-boule,

$$r = \sqrt{i_1^2 + i_2^2 + \cdots + i_n^2}$$, où $i_1$, $i_2$ ... $i_n$ définissent les n indices d'éloignement par rapport au centre de la n-boule pour chaque dimension de l'espace du filtre, ces indices d'éloignement étant des nombres entiers variant entre -s et s, et

signe(x) est la fonction signe et vaut +1 pour $x \geq 0$ et -1 pour $x < 0$.

**11.** Filtre selon la revendication 1, dans lequel la valeur $F(i_1, i_2, ..., i_n)$ de ses points vaut zéro si $r > s$ et, si $r \leq s$ est proportionnelle à :

$$A_s(r) = \{7(6s^6 + 18s^5 - 15s^4 - 60s^3 + 17s^2 - 50s - 12)r$$
$$- 15(12s^4 + 24s^3 - 28s^2 - 40s + 39)r^3 + 77(2s^2 + 2s - 3)r^5\}$$
$$* signe(i_2)$$

avec par définition

s = (d - 1)/2, où d représente le diamètre impair de la n-boule,

$$r = \sqrt{i_1{}^2 + i_2{}^2 + \cdots + i_n{}^2}$$, où $i_1$, $i_2$ ... $i_n$ définissent les n indices d'éloignement par rapport au centre de la n-boule pour chaque dimension de l'espace du filtre, ces indices d'éloignement étant des nombres entiers variant entre -s et s, et

signe(x) est la fonction signe et vaut +1 pour $x \geq 0$ et -1 pour $x < 0$.

**12.** Filtre selon la revendication 1, dans lequel la valeur $F(i_1, i_2, ..., i_n)$ de ses points vaut zéro si $r > s$ et, si $r \leq s$ est proportionnelle à :

$$A_s(r) = 3s(s^3 + 2s^2 - s - 2) - 5(6s^2 + 6s - 5)r^2 + 35r^4$$

avec par définition

s = (d - 1)/2, où d représente le diamètre impair de la n-boule, et

$$r = \sqrt{i_1{}^2 + i_2{}^2 + \cdots + i_n{}^2}$$, où $i_1$, $i_2$ ... $i_n$ définissent les n indices d'éloignement par rapport au centre de la n-boule pour chaque dimension de l'espace du filtre, ces indices d'éloignement étant des nombres entiers variant entre -s et s.

**13.** Filtre selon la revendication 1, dans lequel la valeur $F(i_1, i_2, ..., i_n)$ de ses points vaut zéro si $r > s$ et, si $r \leq s$ est proportionnelle à :

$$A_s(r) = \{(15s^4 + 30s^3 - 35s^2 - 50s + 12)r - 35(2s^2 + 2s - 3)r^3 + 63r^5\}$$
$$* signe(i_2)$$

avec par définition

s = (d - 1)/2, où d représente le diamètre impair de la n-boule,

$$r = \sqrt{i_1{}^2 + i_2{}^2 + \cdots + i_n{}^2}$$, où $i_1$, $i_2$ ... $i_n$ définissent les n indices d'éloignement par rapport au centre de la n-boule pour chaque dimension de l'espace du filtre, ces indices d'éloignement étant des nombres entiers variant entre -s et s, et

signe(x) est la fonction signe et vaut +1 pour $x \geq 0$ et -1 pour $x < 0$.

**14.** Filtre selon l'une des revendications 1 à 13, la goutte étant une région d'un hyperespace dans laquelle une propriété la distingue du bruit ambiant dans ladite image.

**15.** Procédé de traitement d'image par convolution pour la localisation de gouttes dans une image, comprenant une opération de convolution effectuée entre l'image et le filtre (10, 20) selon l'une des revendications précédentes.

**16.** Procédé de traitement d'image selon la revendication 15, dans lequel l'image est obtenue par microscopie électronique en transmission, microscopie à sonde atomique, microscopie optique, microscopie de fluorescence, microscopie par force atomique, microscopie à effet tunnel, microscopie par perte d'énergie des rayons X (X-PEEM), microscopie par diffraction électronique, microscopie par diffraction de rayons X, microscopie par diffraction k-PEEM, microscopie par diffraction de neutrons ou toute technique de microscopie ou d'imagerie produisant des gouttes dans l'image.

**17.** Procédé de traitement d'image selon l'une des revendications 15 et 16, comprenant, préalablement à l'opération de convolution, une étape (102) de transformation géométrique du filtre, dans laquelle les points du premier sous-ensemble (11, 21, 22) subissent une transformation géométrique.

**18.** Procédé de traitement d'image selon l'une des revendications 15 à 17, comprenant une étape de débruitage (210), une étape de lissage (240) et/ou une étape de soustraction de fond (250), chaque étape de débruitage, de lissage et de soustraction de fond comprenant une opération de convolution effectuée entre l'image et le filtre selon l'une des revendications 1 à 13.

**19.** Procédé de traitement d'image selon l'une des revendications 15 à 17, comprenant successivement une étape (210) de débruitage de l'image, une étape (220) optionnelle de correction de distorsion, une étape (230) d'augmentation de la résolution de l'image, une étape (240) de lissage de l'image, dans laquelle une opération de convolution est effectuée entre l'image et le filtre selon l'une des revendications 1 à 14, et une étape (250) de soustraction de fond, dans laquelle une valeur moyenne locale des points de l'image est soustraite à la valeur de chaque point.

**Patentansprüche**

**1.** Faltungsbildverarbeitungsfilter (10, 20) zum Lokalisieren von Tropfen in einem durch Mikroskopie erhaltenen Bild, wobei das Filter und das Bild jeweils aus einem Satz von Punkten gebildet werden, die eine n-Hyperbel in einem $n$-dimensionalen Raum definieren, wobei $n$ eine ganze Zahl größer gleich zwei ist, wobei jeder Punkt des Filters und des Bildes einem numerischen Wert zugeordnet ist, wobei das Filter einen ersten Teilsatz (11, 21, 22) von Punkten, die eine n-Kugel bilden, und einen zweiten Teilsatz (13, 23) von Punkten, der die Punkte enthält, die nicht zum ersten Teilsatz gehören, umfasst, wobei der Wert der Punkte des ersten Teilsatzes von der Mitte zur Peripherie der n-Kugel in Abhängigkeit von Koeffizienten bestimmt wird, die durch ein Polynomnäherungsverfahren Savitzky-Gelay-Typ berechnet werden, wobei der Wert der Punkte des zweiten Teilsatzes Null ist.

**2.** Filter nach Anspruch 1, wobei die n-Kugel zentrosymmetrisch ist, wobei die Punkte, die sich im gleichen Abstand von einer Mitte der n-Kugel befinden, dem gleichen Wert zugeordnet sind.

**3.** Filter nach einem der Ansprüche 1 und 2, wobei der Wert $F(i_1, i_2, ..., i_n)$ seiner Punkte Null ist, wenn $r > s$ und, wenn $r \leq s$ proportional ist zu:

$$A_S(r) = 3s^2 + 3s - 1 - 5r^2$$

wobei per Definition

$s = (d - 1)/2$, wobei $d$ den ungeraden Durchmesser der n-Kugel darstellt, und $r = \sqrt{i_1{}^2 + i_2{}^2 + \cdots + i_n{}^2}$, wobei $i_1$, $i_2...i_n$ die $n$ Indizes derAusrichtung in Bezug auf die Mitte der n-Kugel für jede Dimension des Raums des Filters definieren, wobei diese Indizes der Ausrichtung ganze Zahlen sind, die zwischen $-s$ und $s$ variieren.

**4.** Filter nach einem der Ansprüche 1 und 2, wobei der Wert $F(i_1, i_2, ..., i_n)$ seiner Punkte Null ist, wenn $r > s$ und, wenn $r \leq s$ proportional ist zu:

$$A_S(r) = (15s^4 + 30s^3 - 35s^2 - 50s + 12) - 35(2s^2 + 2s - 3)r^2 + 63r^4$$

wobei per Definition

$s = (d - 1)/2$, wobei d den ungeraden Durchmesser der n-Kugel darstellt, und

$r = \sqrt{i_1^2 + i_2^2 + \cdots + i_n^2}$ , wobei $i_1$, $i_2$ ... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen $-s$ und $s$ variieren.

5. Filter nach Anspruch 1, wobei der Wert $F(i_1, i_2, ..., i_n)$ seiner Punkte Null ist, wenn $r > s$ und, wenn $r \leq s$ proportional ist zu:

$$A_S(r) = r * sign(i_2)$$

wobei per Definition

$s = (d - 1)/2$, wobei d den ungeraden Durchmesser der n-Kugel darstellt,

$r = \sqrt{i_1^2 + i_2^2 + \cdots + i_n^2}$ ,wobei $i_1$, $i_2$ ... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen $-s$ und $s$ variieren, und
$sign(x)$ die Funktion sign ist und +1 für $x \geq 0$ und -1 für $x < 0$ steht.

6. Filter nach Anspruch 1, wobei der Wert $F(i_1, i_2, ..., i_n)$ seiner Punkte Null ist, wenn $r > s$ und, wenn $r \leq s$ proportional ist zu:

$$A_S(r) = \{5(3s^4 + 6s^3 - 3s + 1)r - 7(3s^2 + 3s - 1)r^3\} * sign(i_2)$$

wobei per Definition

$s = (d - 1)/2$, wobei $d$ den ungeraden Durchmesser der n-Kugel darstellt,

$r = \sqrt{i_1^2 + i_2^2 + \cdots + i_n^2}$ , wobei $i_1$, $i_2$... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen $-s$ und $s$ variieren, und
$sign(x)$ die Funktion sign ist und +1 für $x \geq 0$ und -1 für $x < 0$ steht.

7. Filter nach Anspruch 1, wobei der Wert $F(i_1, i_2, ..., i_n)$ seiner Punkte Null ist, wenn $r > s$ und, wenn $r \leq s$ proportional ist zu:

$$A_S(r) = \{7(25s^8 + 100s^7 - 50s^6 - 500s^5 - 95s^4 + 760s^3 + 180s^2 - 300s + 72)r$$

$$- 105(6s^6 + 18s^5 - 15s^4 - 60s^3 + 17s^2 + 50s - 12)r^3$$

$$+ 33(15s^4 + 30s^3 - 35s^2 - 50s + 12)r^5\} * sign(i_2)$$

wobei per Definition

$s = (d - 1)/2$, wobei $d$ den ungeraden Durchmesser der n-Kugel darstellt,

$r = \sqrt{i_1^2 + i_2^2 + \cdots + i_n^2}$ , wobei $i_1$, $i_2$... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen $-s$ und $s$ variieren, und
$sign(x)$ die Funktion sign ist und +1 für $x \geq 0$ und -1 für $x < 0$ steht.

8. Filter nach Anspruch 1, wobei der Wert $F(i_1, i_2, ..., i_n)$ seiner Punkte Null ist, wenn $r > s$ und, wenn $r \leq s$ proportional

ist zu:

$$A_S(r) = 3r^2 - s(s + 1)$$

wobei per Definition

$s = (d - 1)/2$, wobei $d$ den ungeraden Durchmesser der n-Kugel darstellt, und

$r = \sqrt{i_1{}^2 + i_2{}^2 + \cdots + i_n{}^2}$ , wobei $i_1$, $i_2$ ... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen -$s$ und $s$ variieren.

9. Filter nach Anspruch 1, wobei der Wert $F(i_1, i_2, ..., i_n)$ seiner Punkte Null ist, wenn $r > s$ und, wenn $r \leq s$ proportional ist zu:

$$A_S(r) = 15(6s^2 + 6s - 5)r^4 - 21(4s^4 + 8s^3 - 4s^2 - 8s + 5)r^2$$

$$+ 5s(2s^5 + 6s^4 - s^3 - 12s^2 - s + 6)$$

wobei per Definition

$s = (d - 1)/2$, wobei $d$ den ungeraden Durchmesser der n-Kugel darstellt, und

$r = \sqrt{i_1{}^2 + i_2{}^2 + \cdots + i_n{}^2}$, wobei $i_1$, $i_2$... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen -$s$ und $s$ variieren.

10. Filter nach Anspruch 1, wobei der Wert $F(i_1, i_2, ..., i_n)$ seiner Punkte Null ist, wenn $r > s$ und, wenn $r \leq s$ proportional ist zu:

$$A_S(r) = \{5r^3 - (3s^2 + 3s - 1)r\} * sign(i_2)$$

wobei per Definition

$s = (d - 1)/2$, wobei $d$ den ungeraden Durchmesser der n-Kugel darstellt,

$r = \sqrt{i_1{}^2 + i_2{}^2 + \cdots + i_n{}^2}$ , wobei $i_1$, $i_2$... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen -$s$ und $s$ variieren, und
$sign(x)$ die Funktion sign ist und +1 für $x \geq 0$ und -1 für $x < 0$ steht.

11. Filter nach Anspruch 1, wobei der Wert $F(i_1, i_2, ..., i_n)$ seiner Punkte Null ist, wenn $r > s$ und, wenn $r \leq s$ proportional ist zu:

$$A_S(r) = \{7(6s^6 + 18s^5 - 15s^4 - 60s^3 + 17s^2 - 50s - 12)r$$

$$- 15(12s^4 + 24s^3 - 28s^2 - 40s + 39)r^3 + 77(2s^2 + 2s - 3)r^5\}$$

$$* sign(i_2)$$

wobei per Definition

$s = (d - 1)/2$, wobei $d$ den ungeraden Durchmesser der n-Kugel darstellt, $r = \sqrt{i_1{}^2 + i_2{}^2 + \cdots + i_n{}^2}$

, wobei $i_1$, $i_2$ ... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen -s und s variieren, und

$sign(x)$ die Funktion sign ist und +1 für $x \geq 0$ und -1 für $x < 0$ steht.

12. Filter nach Anspruch 1, wobei der Wert $F(i_1, i_2, ..., i_n)$ seiner Punkte Null ist, wenn $r > s$ und, wenn $r \leq s$ proportional ist zu:

$$A_S(r) = 3s(s^3 + 2s^2 - s - 2) - 5(6s^2 + 6s - 5)r^2 + 35r^4$$

wobei per Definition

$s = (d - 1)/2$, wobei $d$ den ungeraden Durchmesser der n-Kugel darstellt, und

$r = \sqrt{i_1^2 + i_2^2 + \cdots + i_n^2}$ , wobei $i_1$, $i_2$... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen -s und s variieren.

13. Filter nach Anspruch 1, wobei der Wert $F(i_1, i_2, ..., i_n)$ seiner Punkte Null ist, wenn $r > s$ und, wenn $r \leq s$ proportional ist zu:

$$A_S(r) = \{(15s^4 + 30s^3 - 35s^2 - 50s + 12)r - 35(2s^2 + 2s - 3)r^3 + 63r^5\}$$

$$* sign(i_2)$$

wobei per Definition

$$r = \sqrt{i_1^2 + i_2^2 + \cdots + i_n^2}$$

$s = (d - 1)/2$, wobei $d$ den ungeraden Durchmesser der n-Kugel darstellt,

, wobei $i_1$, $i_2$... $i_n$ die $n$ Indizes der Ausrichtung in Bezug auf die Mitte der n-Kugel für jede Dimension des Raums des Filters definieren, wobei diese Indizes der Ausrichtung ganze Zahlen sind, die zwischen -s und s variieren, und

$sign(x)$ die Funktion sign ist und +1 für $x \geq 0$ und -1 für $x < 0$ steht.

14. Filter nach einem der Ansprüche 1 bis 13, wobei der Tropfen ein Bereich eines Hyperraums ist, in dem ihn eine Eigenschaft vom Umgebungsrauschen in dem Bild unterscheidet.

15. Faltungsbildverarbeitungsverfahren zum Lokalisieren von Tropfen in einem Bild, umfassend eine Faltungsoperation, die zwischen dem Bild und dem Filter (10, 20) nach einem der vorhergehenden Ansprüche durchgeführt wird.

16. Bildverarbeitungsverfahren nach Anspruch 15, wobei das Bild durch Transmissionselektronenmikroskopie, Atomsondenmikroskopie, optische Mikroskopie, Fluoreszenzmikroskopie, Rasterkraftmikroskopie, Rastertunnelmikroskopie, Photoemissionselektronenmikroskopie (X-PEEM), Elektronenbeugungsmikroskopie, Röntgenbeugungsmikroskopie, k-PEEM-Beugungsmikroskopie, Neutronenbeugungsmikroskopie oder jedes andere Mikroskopie- oder Bildgebungsverfahren, das Tropfen im Bild erzeugt, erhalten wird.

17. Bildverarbeitungsverfahren nach einem der Ansprüche 15 und 16, umfassend vor der Faltungsoperation einen Schritt (102) der geometrischen Transformation des Filters, bei dem die Punkte der ersten Teilmenge (11, 21, 22) einer geometrische Transformation ausgesetzt sind.

18. Bildverarbeitungsverfahren nach einem der Ansprüche 15 bis 17, umfassend einen Schritt des Entrauschens (210), einen Schritt des Glättens (240) und/oder einen Schritt des Abziehens des Hintergrunds (250), wobei jeder Schritt des Entrauschens, Glättens und Abziehens des Hintergrunds eine Faltungsoperation umfasst, die zwischen dem Bild und dem Filter nach einem der Ansprüche 1 bis 13 durchgeführt wird.

19. Bildverarbeitungsverfahren nach einem der Ansprüche 15 bis 17, nacheinander umfassend einen Schritt (210) des Entrauschens des Bildes, einen optionalen Schritt (220) des Verzerrungskorrigierens, einen Schritt (230) des Erhöhens der Auflösung des Bilds, einen Schritt (240) des Glättens des Bilds, wobei eine Faltungsoperation zwischen dem Bild und dem Filter nach einem der Ansprüche 1 bis 14 durchgeführt wird, und einen Schritt (250) des Abziehens des Hintergrunds, wobei ein lokaler Durchschnittswert der Punkte des Bildes vom Wert jedes Punkts abgezogen wird.

**Claims**

1. A convolutional image processing filter (10, 20) for locating drops in an image obtained by microscopy, each of the filter and the image being formed of a set of points defining an n-hyperpatch in an $n$-dimension space, $n$ being an integer greater than or equal to two, each point of the filter and of the image being associated with a numerical value, the filter including a first subset (11, 21, 22) of points forming an n-ball and a second subset (13, 23) of points comprising the points not belonging to the first subset, the value of the points of the first subset being determined, from the centre towards the periphery of the n-ball, according to coefficients calculated by a Savitzky-Golay type polynomial approximation method, the value of the points of the second subset being zero.

2. The filter according to claim 1, wherein the n-ball is centrosymmetric, the points located at the same distance from a centre of said n-ball being associated with the same value.

3. The filter according to one of claims 1 and 2, wherein the value $F(i_1, i_2, ..., i_n)$ of its points amounts to zero if $r > s$ and, if $r \leq s$ is proportional to:

$$A_s(r) = 3s^2 + 3s - 1 - 5r^2$$

with by definition

$s = (d - 1)/2$, where $d$ represents the odd diameter of the n-ball, and

$r = \sqrt{i_1^2 + i_2^2 + \cdots + i_n^2}$ , where $i_1, i_2, ..., i_n$ define the $n$ indices of distance with respect to the centre of the n-ball for each dimension of the space of the filter, these distance indices being integers varying between $-s$ and $s$.

4. The filter according to one of claims 1 and 2, wherein the value $F(i_1, i_2, ..., i_n)$ of its points amounts to zero if $r > s$ and, if $r \leq s$ is proportional to:

$$A_s(r) = (15s^4 + 30s^3 - 35s^2 - 50s + 12) - 35(2s^2 + 2s - 3)r^2 + 63r^4$$

with by definition

$s = (d - 1)/2$, where $d$ represents the odd diameter of the n-ball, and

$r = \sqrt{i_1^2 + i_2^2 + \cdots + i_n^2}$ , where $i_1, i_2, ..., i_n$ define the $n$ indices of distance with respect to the centre of the n-ball for each dimension of the space of the filter, these distance indices being integers varying between $-s$ and $s$.

5. The filter according to claim 1, wherein the value $F(i_1, i_2, ..., i_n)$ of its points amounts to zero if $r > s$ and, if $r \leq s$ is proportional to:

$$A_s(r) = r * sign(i_2)$$

with by definition

$s = (d - 1)/2$, where $d$ represents the odd diameter of the n-ball, $r = \sqrt{i_1^2 + i_2^2 + \cdots + i_n^2}$

, where $i_1$, $i_2$, ..., $i_n$ define the $n$ indices of distance with respect to the centre of the n-ball for each dimension of the space of the filter, these distance indices being integers varying between -$s$ and $s$, and $sign(x)$ is the sign function and amounts to +1 for $x \geq 0$ and -1 for $x < 0$.

6. The filter according to claim 1, wherein the value $F(i_1, i_2, ..., i_n)$ of its points amounts to zero if $r > s$ and, if $r \leq s$ is proportional to:

$$A_s(r) = \{5(3s^4 + 6s^3 - 3s + 1)r - 7(3s^2 + 3s - 1)r^3\} * sign(i_2)$$

with by definition

$s = (d - 1)/2$, where $d$ represents the odd diameter of the n-ball, $\quad r = \sqrt{i_1^2 + i_2^2 + \cdots + i_n^2}$
, where $i_1$, $i_2$, ..., $i_n$ define the $n$ indices of distance with respect to the centre of the n-ball for each dimension of the space of the filter, these distance indices being integers varying between -$s$ and $s$, and $sign(x)$ is the sign function and amounts to +1 for $x \geq 0$ and -1 for $x < 0$.

7. The filter according to claim 1, wherein the value $F(i_1, i_2, ..., i_n)$ of its points amounts to zero if $r > s$ and, if $r \leq s$ is proportional to:

$$A_s(r) = \{7(25s^8 + 100s^7 - 50s^6 - 500s^5 - 95s^4 + 760s^3 + 180s^2 - 300s + 72)r$$
$$- 105(6s^6 + 18s^5 - 15s^4 - 60s^3 + 17s^2 + 50s - 12)r^3 + 33(15s^4$$
$$+ 30s^3 - 35s^2 - 50s + 12)r^5\} * sign(i_2)$$

with by definition

$s = (d - 1)/2$, where $d$ represents the odd diameter of the n-ball, $\quad r = \sqrt{i_1^2 + i_2^2 + \cdots + i_n^2}$
, where $i_1$, $i_2$, ..., $i_n$ define the $n$ indices of distance with respect to the centre of the n-ball for each dimension of the space of the filter, these distance indices being integers varying between -$s$ and $s$, and $sign(x)$ is the sign function and amounts to +1 for $x \geq 0$ and -1 for $x < 0$.

8. The filter according to claim 1, wherein the value $F(i_1, i_2, ..., i_n)$ of its points amounts to zero if $r > s$ and, if $r \leq s$ is proportional to:

$$A_s(r) = 3r^2 - s(s + 1)$$

with by definition

$s = (d - 1)/2$, where $d$ represents the odd diameter of the n-ball, and
$r = \sqrt{i_1^2 + i_2^2 + \cdots + i_n^2}$
, where $i_1$, $i_2$, ..., $i_n$ define the $n$ indices of distance with respect to the centre of the n-ball for each dimension of the space of the filter, these distance indices being integers varying between -$s$ and $s$.

9. The filter according to claim 1, wherein the value $F(i_1, i_2, ..., i_n)$ of its points amounts to zero if $r > s$ and, if $r \leq s$ is proportional to:

$$A_s(r) = 15(6s^2 + 6s - 5)r^4 - 21(4s^4 + 8s^3 - 4s^2 - 8s + 5)r^2 + 5s(2s^5 + 6s^4$$
$$- s^3 - 12s^2 - s + 6)$$

with by definition

$s = (d - 1)/2$, where $d$ represents the odd diameter of the n-ball, and

$$r = \sqrt{i_1{}^2 + i_2{}^2 + \cdots + i_n{}^2}$$ , where $i_1$, $i_2$, ...,$i_n$ define the $n$ indices of distance with respect to the centre of the n-ball for each dimension of the space of the filter, these distance indices being integers varying between $-s$ and $s$.

**10.** The filter according to claim 1, wherein the value $F(i_1, i_2, ..., i_n)$ of its points is zero if $r > s$ and, if $r \leq s$ is proportional to:

$$A_s(r) = \{5r^3 - (3s^2 + 3s - 1)r\} * sign(i_2)$$

with by definition

$s = (d - 1)/2$, where $d$ represents the odd diameter of the n-ball, $\quad r = \sqrt{i_1{}^2 + i_2{}^2 + \cdots + i_n{}^2}$ , where $i_1$,$i_2$, ..., $i_n$ define the $n$ indices of distance with respect to the centre of the n-ball for each dimension of the space of the filter, these distance indices being integers varying between $-s$ and $s$, and $sign(x)$ is the sign function and amounts to $+1$ for $x \geq 0$ and $-1$ for $x < 0$.

**11.** The filter according to claim 1, wherein the value $F(i_1, i_2, ..., i_n)$ of its points amounts to zero if $r > s$ and, if $r \leq s$ is proportional to:

$$A_s(r) = \{7(6s^6 + 18s^5 - 15s^4 - 60s^3 + 17s^2 - 50s - 12)r$$
$$- 15(12s^4 + 24s^3 - 28s^2 - 40s + 39)r^3 + 77(2s^2 + 2s - 3)r^5\}$$
$$* sign(i_2)$$

with by definition

$s = (d - 1)/2$, where d represents the odd diameter of the n-ball,

$$r = \sqrt{i_1{}^2 + i_2{}^2 + \cdots + i_n{}^2}$$ , where $i_1$, $i_2$, ..., $i_n$ define the $n$ indices of distance with respect to the centre of the n-ball for each dimension of the space of the filter, these distance indices being integers varying between $-s$ and $s$, and $sign(x)$ is the sign function and amounts to $+1$ for $x \geq 0$ and $-1$ for $x < 0$.

**12.** The filter according to claim 1, wherein the value $F(i_1, i_2, ..., i_n)$ of its points is zero if $r > s$ and, if $r \leq s$ is proportional to:

$$A_s(r) = 3s(s^3 + 2s^2 - s - 2) - 5(6s^2 + 6s - 5)r^2 + 35r^4$$

with by definition

$s = (d - 1)/2$, where d represents the odd diameter of the n-ball, and

$$r = \sqrt{i_1{}^2 + i_2{}^2 + \cdots + i_n{}^2}$$ , where $i_1$, $i_2$, ..., $i_n$ define the $n$ indices of distance with respect to the centre of the n-ball for each dimension of the space of the filter, these distance indices being integers varying between $-s$ and $s$.

**13.** The filter according to claim 1, wherein the value $F(i_1, i_2, ..., i_n)$ of its points amounts to zero if $r > s$ and, if $r \leq s$ is proportional to:

$$A_s(r) = \{(15s^4 + 30s^3 - 35s^2 - 50s + 12)r - 35(2s^2 + 2s - 3)r^3 + 63r^5\}$$
$$* sign(i_2)$$

with by definition

$s = (d$ - 1$)/2$, where $d$ represents the odd diameter of the n-ball,

$$r = \sqrt{i_1{}^2 + i_2{}^2 + \cdots + i_n{}^2}$$ , where $i_1$, $i_2$, ..., $i_n$ define the $n$ indices of distance with respect to the centre of the n-ball for each dimension of the space of the filter, these distance indices being integers varying between -$s$ and $s$, and
$sign(x)$ is the sign function and amounts to +1 for $x \geq 0$ and -1 for $x < 0$.

14. The filter according to one of claims 1 to 13, the drop being a region of a hyperspace in which a property distinguishes it from the ambient noise in said image.

15. A convolutional image processing method for locating drops in an image, comprising a convolution operation performed between the image and the filter (10, 20) according to one of the preceding claims.

16. The image processing method according to claim 15, wherein the image is obtained by transmission electron microscopy, atom probe microscopy, optical microscopy, fluorescence microscopy, atomic force microscopy, scanning tunnelling microscopy, x-ray energy-loss microscopy (X-PEEM), electron diffraction microscopy, x-ray diffraction microscopy, k-PEEM diffraction microscopy, neutron diffraction microscopy or any microscopy or imaging technique producing drops in the image.

17. The image processing method according to one of claims 15 and 16, comprising, prior to the convolution operation, a step (102) of geometric transformation of the filter, during which the points of the first subset (11, 21, 22) undergo a geometric transformation.

18. The image processing method according to one of claims 15 to 17, comprising a denoising step (210), a smoothing step (240) and/or a background subtraction step (250), each denoising, smoothing and background subtraction step comprising a convolution operation performed between the image and the filter according to one of claims 1 to 13.

19. The image processing method according to one of claims 15 to 17, successively comprising a step (210) of denoising the image, an optional distortion correction step (220), a step (230) of increasing the resolution of the image, a step (240) of smoothing the image, wherein a convolution operation is performed between the image and the filter according to one of claims 1 to 14, and a background subtraction step (250), wherein a local average value of the points in the image is subtracted from the value of each point.

FIG. 1

FIG. 2

FIG. 3

FIG. 4

FIG. 5

a    b    c

# FIG. 6

20    21    22    23

# FIG. 7

a  b

FIG. 8

a  b  c  d

e  f  g

FIG. 9

a  b  c  d

FIG. 10

a        b        c

# FIG. 11

a        b        c        d        e

# FIG. 12

a        b        c        d

# FIG. 13

100

| DÉTERMINATION DE LA VALEUR DES POINTS DE LA BOULE | 101 |

↓

| TRANSFORMATION GÉOMÉTRIQUE DE LA BOULE | 102 |

↓

| AJOUT DES POINTS ENVELOPPANT LA BOULE POUR FORMER UN FILTRE EN FORME D'HYPERPAVÉ | 103 |

↓

| NORMALISATION DE LA VALEUR DES POINTS | 104 |

# FIG. 14

Image initiale

200

↓

| DÉBRUITAGE DE L'IMAGE | 210 |

Image débruitée

↓

| CORRECTION DE DISTORSION | 220 |

Image réalignée

↓

| AUGMENTATION DE LA RÉSOLUTION DE L'IMAGE | 230 |

Image super-résolue

↓

| LISSAGE DE L'IMAGE | 240 |

Image lissée

↓

| SOUSTRACTION DE FOND | 250 |

↓

Image normalisée

# FIG. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0893783 A1

**Littérature non-brevet citée dans la description**

- **A. BUADES ; B. COLL ; J. M. MOREL.** A review of image denoising methods, with a new one. *SIAM J. Multiscale Model. Simul.,* 2005, vol. 4 (2), 490-530
- **SMAL et al.** Quantitative comparison of spot détection methods in fluorescence microscopy. *IEEE Transactions on Medical Imaging,* 2010, vol. 29 (2), 282-301
- **M. MABASO et al.** Spot détection methods in fluorescence microscopy imaging: a review. *Image Anal. Stereol.,* 2018, vol. 37, 173-190
- **G. WANG et al.** Automated blob détection using itérative laplacian of Gaussian filtering and unilateral second-order gaussian kernels. *Digital Signal Processing,* 2020, vol. 96, 102592
- **CANNISTRACI CARLO et al.** Median-modified Wiener filter provides efficient denoising, preserving spot edge and morphology in 2-DE image processing. *Proteomics,* vol. 9 (21), 4908-4919
- **CHINRUNGRUENG C et al.** Fast edge-preserving noise réduction for ultrasound images. *Nuclear science symposium conférence record,* 15 Octobre 2000, vol. 3, 99-103
- **SAVITZKY, A. ; GOLAY, M. J. E.** Smoothing and différentiation of data by simplified least-squares procedures. *Analytical Chemistry,* 1964, vol. 36, 1627-1639
- **P. A. GORRY.** General least-squares smoothing and différentiation by the convolution (Savitzky-Golay) method. *Anal. Chem.,* 1990, vol. 62 (6), 570-573

- **THORNLEY ; DAVID J.** Anisotropic Multidimensional Savitzky Golay kernels for Smoothing, Differentiation and Reconstruction (PDF) (Technical report). *Imperial College Department of Computing,* 2006, vol. 2066-8
- **H. H. MADDEN.** Comments on Savitzky-Golay Convolution Method for Least-Squares Fit Smoothing and Differentiation of Digital Data. *Analytical Chemistry,* 1978, vol. 50, 1383-1386
- **BERNSEN, J.** Dynamic Thresholding of Grey-Level Images. *Proc. of the 8th Int. Conf. on Pattern Recognition,* 1986
- **A. BUADES et al.** A review of image denoising algorithms, with a new one. *Multiscale Modeling and Simulation,* 2005, vol. 4, 490-530
- **GOYAL, BHAWNA et al.** Image Denoising Review: From classical to state-of-the-art approaches. *Information Fusion,* 55
- **X. SANG ; J. M. LEBEAU.** Revolving scanning transmission electron microscopy : correcting sample drift distorsion without prior knowledge. *Ultramicroscopy,* 2014, vol. 1338, 28-35
- **L. I. RUDIN et al.** Nonlinear total variation based noise removal algorithms. *Physica D,* 1992, vol. 60 (1), 259-268
- **T. CHAN et al.** High order total variation-based image restoration. *SIAM J. Sci. Comput.,* 2000, vol. 22 (2), 503-516
- **G. CHANTAS et al.** Variational Bayasian image restoration with a product of spatially weighted total variation image priors. *IEEE Trans. Image Proc.,* 2010, vol. 19 (2), 351-362